(19) Europäisches Patentamt
European Patent Office
Office européen des brevets

(11) EP 4 206 259 A1

(12) EUROPEAN PATENT APPLICATION
published in accordance with Art. 153(4) EPC

(43) Date of publication:
**05.07.2023 Bulletin 2023/27**

(21) Application number: **21861530.0**

(22) Date of filing: **24.08.2021**

(51) International Patent Classification (IPC):
***C08G 75/0213*** *(2016.01)* ***C08G 75/0222*** *(2016.01)*
***C08G 75/0231*** *(2016.01)* ***C08G 75/0236*** *(2016.01)*
***C08G 75/0245*** *(2016.01)* ***C08G 75/0254*** *(2016.01)*
***C08G 75/0259*** *(2016.01)* ***C08G 75/029*** *(2016.01)*

(52) Cooperative Patent Classification (CPC):
**C08G 75/0213; C08G 75/0222; C08G 75/0231; C08G 75/0236; C08G 75/0245; C08G 75/0254; C08G 75/0259; C08G 75/029**

(86) International application number:
**PCT/JP2021/030920**

(87) International publication number:
**WO 2022/045105 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.08.2020 JP 2020143334**
**25.02.2021 JP 2021028435**
**18.05.2021 JP 2021083560**

(71) Applicant: **Toray Industries, Inc.**
**Tokyo 103-8666 (JP)**

(72) Inventors:
- **MIYABARA, Yuichiro**
  **Nagoya-shi, Aichi 455-8502 (JP)**
- **FUWA, Takuto**
  **Nagoya-shi, Aichi 455-8502 (JP)**
- **SHOKYU, Katsuya**
  **Nagoya-shi, Aichi 455-8502 (JP)**
- **UNOHARA, Takeshi**
  **Otsu-shi, Shiga 520-8558 (JP)**

(74) Representative: **Mewburn Ellis LLP**
**Aurora Building**
**Counterslip**
**Bristol BS1 6BX (GB)**

# (54) POLYARYLENE SULFIDE PRODUCTION METHOD, POLYARYLENE SULFIDE COPOLYMER PRODUCTION METHOD, AND POLYARYLENE SULFIDE

(57) An object of the present invention is to provide a method of producing a polyarylene sulfide, which method allows for easily and efficiently providing a polyarylene sulfide in which a large number of reactive functional groups are introduced into the molecular chain. The present invention provides a method of producing a polyarylene sulfide, the method including allowing at least a dihalogenated aromatic compound, an inorganic sulfurizing agent and a compound (A) to react in an organic polar solvent, in the presence of an alkali metal hydroxide. In the present method, the compound (A) is present within the range of 0.04 moles or more and 0.5 moles or less with respect to 1 mole of the inorganic sulfurizing agent, in a reaction vessel. The compound (A) is a compound containing at least one aromatic ring, and having, on the one aromatic ring, at least one reactive functional group selected from the group consisting of amino group, carboxyl group, an acid anhydride group, isocyanate group, epoxy group and silanol group, and at least one functional group selected from the group consisting of hydroxyl group, a salt of hydroxyl group, thiol group and a salt of thiol group.

EP 4 206 259 A1

**Description**

Technical Field

The present invention relates to a method of producing a polyarylene sulfide containing a functional group.

Background Art

Polyarylene sulfides typified by polyphenylene sulfide (hereinafter, abbreviated as "PPS") have suitable characteristics as engineering plastics, such as heat resistance, barrier properties, formability, chemical resistance, electrical insulation properties and resistance to moist heat, and are used in various types of electric and electronic components, mechanical parts, automotive parts, films, fibers and the like, mainly in injection molding and extrusion molding applications. Polyarylene sulfides are used in a wider range of applications, in recent years, because of their excellent properties.

On the other hand, polyarylene sulfides have problems that adhesion to different materials or the formation of composites therewith are difficult, because polyarylene sulfides have fewer functional groups in the molecular chains and thus have poorer interaction and reactivity as compared to other engineering plastics typified by polyamides, polyesters and the like.

Therefore, many attempts have been done to introduce reactive functional groups into polyarylene sulfides. For example, Patent Literature 1 discloses a method of introducing a reactive functional group into the main chain of a polyarylene sulfide, by adding 2,4-dichlorobenzoic acid at the same time as p-dichlorobenzene to allow polymerization to occur. Patent Literature 2 discloses a method of introducing a reactive functional group into the end of a polyarylene sulfide, by allowing a monohalogenated compound containing a carboxylic acid to react with a metal hydroxide when producing the polyarylene sulfide. Further, Patent Literature 3 discloses a method of producing a polyarylene sulfide containing a reactive functional group, by heating a cyclic arylene sulfide with a sulfurcontaining compound containing a reactive functional group, and Patent Literature 4 discloses a method of producing a polyarylene sulfide containing a reactive functional group, using an aromatic thiol.

Polyarylene sulfides containing reactive functional groups are also useful as prepolymers for obtaining polyarylene sulfide copolymers. Patent Literature 5 discloses a polyarylene sulfide copolymer obtained by allowing a polyarylene sulfide containing a reactive functional group to react with a rigid molecule.

Citation List

Patent Literature

Patent Literature 1: JP 4-283247 A (CLAIMS)
Patent Literature 2: JP 2017-066261 A (CLAIMS)
Patent Literature 3: WO 2012/057319 (CLAIMS)
Patent Literature 4: JP 2020-084027 A (CLAIMS)
Patent Literature 5 WO 2019/151288 (CLAIMS)

Summary of Invention

Technical Problem

However, the method disclosed in Patent Literature 1 failed to provide an optimal molecular design, because, since a reactive functional group is introduced into the main chain, the frequency of contact with the reaction target is decreased, making it unable to utilize the reactivity. The method disclosed in Patent Literature 2 has a problem that, although the method allows for introducing a reactive functional group into the molecular chain of the polyarylene sulfide, the amount of reactive functional groups introduced into the polyarylene sulfide is small relative to the amount of reactive functional groups in the compound used as a raw material, and thus a large amount of the compound is wasted without being reacted. The method disclosed in Patent Literature 3 includes a large number of steps and cannot be said to be an easy method, although the method allows for introducing a reactive functional group into the polyarylene sulfide. Further, in the method disclosed in Patent Literature 4, the amount of functional groups introduced into the polyarylene sulfide is small, and cannot be said to be sufficient. The method of producing a polyarylene sulfide copolymer disclosed in Patent Literature 5 has a problem that the polyarylene sulfide as a prepolymer contains impurities, and thus gas is

generated during heat processing required for producing the polyarylene sulfide copolymer.

An object of the present invention is to easily and efficiently provide a polyarylene sulfide in which a large number of reactive functional groups are introduced into the molecular chain. Further, it is also an object of the present invention to provide a method of producing a polyarylene sulfide copolymer in which a small amount of gas is generated during heat processing, by obtaining a reactive functional group-containing polyarylene sulfide with small amounts of impurities, and using the resulting polyarylene sulfide as a prepolymer.

Solution to Problem

The present invention has been made for the purpose of solving at least some of the problems described above, which can be achieved by providing the following.

A method of producing a polyarylene sulfide, the method including allowing at least a dihalogenated aromatic compound, an inorganic sulfurizing agent and a compound (A) to react in an organic polar solvent, in the presence of an alkali metal hydroxide, characterized in that:

the compound (A) is present within the range of 0.04 moles or more and 0.5 moles or less with respect to 1 mole of the inorganic sulfurizing agent, in a reaction vessel; and
the compound (A) is a compound containing at least one aromatic ring, and having, on the one aromatic ring, at least one reactive functional group selected from the group consisting of amino group, carboxyl group, an acid anhydride group, isocyanate group, epoxy group and silanol group, and at least one functional group selected from the group consisting of hydroxyl group, a salt of hydroxyl group, thiol group and a salt of thiol group.

Further, the present invention includes a method of producing a polyarylene sulfide copolymer, the method including:

obtaining a polyarylene sulfide by the above-described method of producing a polyarylene sulfide;
then mixing the polyarylene sulfide with at least one compound (B) selected from compounds represented by the following formulae (a) to (k); and
further heating the resulting mixture:

[Chem 1]

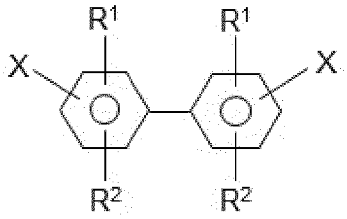
... (a)

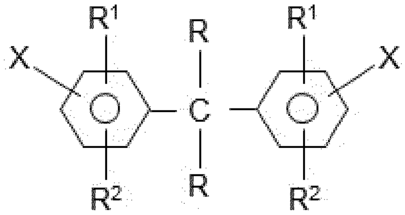
... (b)

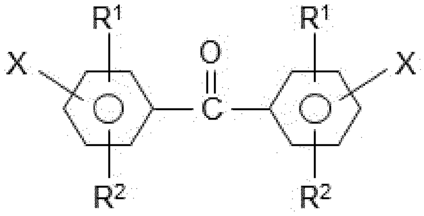
... (c)

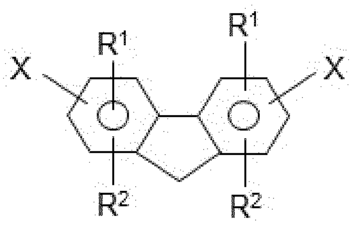
... (d)

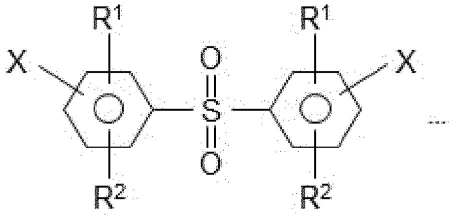
... (e)

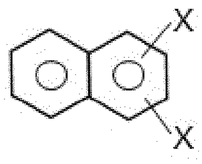
... (f)

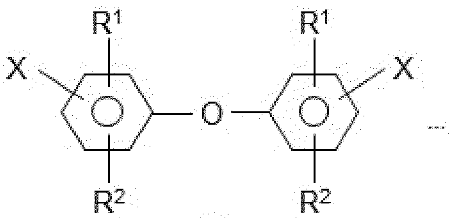
... (g)

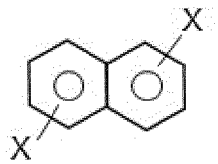
... (h)

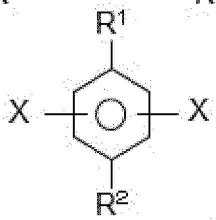
... (i)

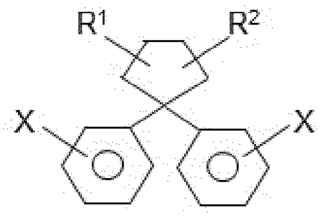
... (j)

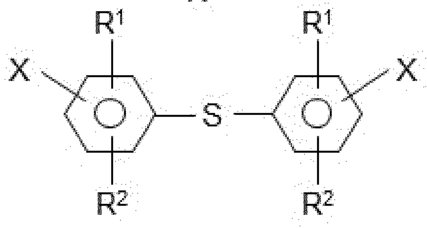
... (k)

(wherein each X represents any one selected from the group consisting of a hydroxyl group, a carboxyl group, a silanol group, a sulfonic acid group, an amino group, an acid anhydride group, an acetamide group, a sulfonamide group, a cyano group, an isocyanate group, an aldehyde group, an acetyl group, an epoxy group and an alkoxysilane group; and each of Rs, $R^1$s and $R^2$s represents a substituent selected from the group consisting of a hydrogen atom, an alkyl group having from 1 to 12 carbon atoms, an aryl group having from 6 to 24 carbon atoms and a halogen group, and Rs, $R^1$s and $R^2$s may be the same as, or different from, each other).

Further, the present invention provides a polyarylene sulfide containing amino groups within the range of 400 μmol/g or more and 5,000 μmol/g or less,
wherein the polyarylene sulfide has a weight reduction rate of 5 wt% or less when heated from 30°C to 320°C at a temperature rise rate of 10°C/min. Advantageous Effects of Invention

According to the present invention, a polyarylene sulfide in which a large number of reactive functional groups

are introduced into the molecular chain can be provided efficiently by an easy method. Further, a polyarylene sulfide containing a reactive functional group and produced by the production method according to present invention has a characteristic that a small amount of gas is produced during heating. Therefore, in the case of producing a polyarylene sulfide copolymer by: obtaining a polyarylene sulfide by the production method according to the present invention; then mixing the polyarylene sulfide with a reactive compound; and further heating the resulting mixture, it is possible to improve workability because the amount of gas generated during a heating operation is reduced.

Description of Embodiments

Embodiments of the present invention will be described below in detail.

The "polyarylene sulfide" in the embodiments of the present invention refers to a homopolymer or a copolymer containing a repeating unit represented by the formula -(Ar-S)- as a main structural unit, preferably containing 70% by mole or more of the repeating unit. Examples of Ar include units represented by the following formulae (l) to (v). Among these, a unit represented by the formula (l) is particularly preferred.

[Chem 2]

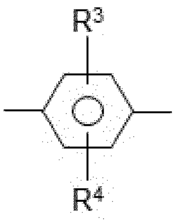
...(l)

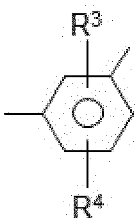
...(m)

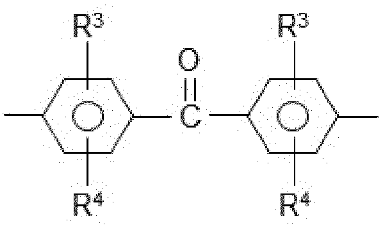
...(n)

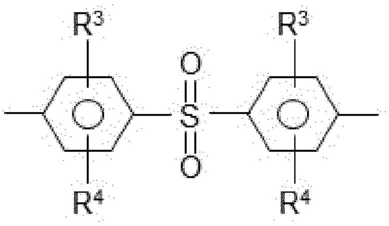
...(o)

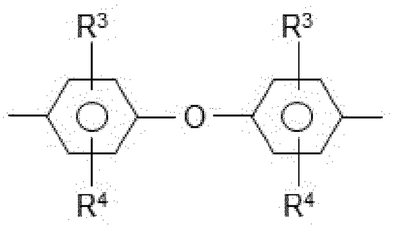
...(p)

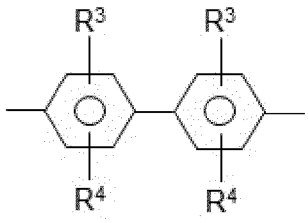
...(q)

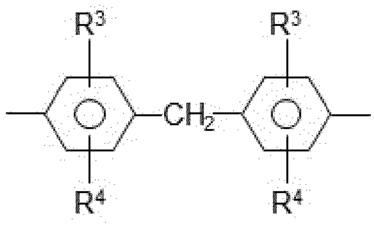
...(r)

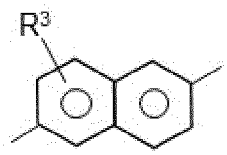
...(s)

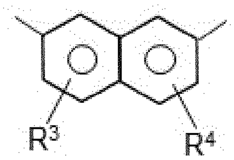
...(t)

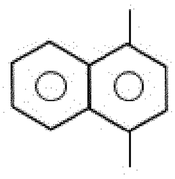
...(u)

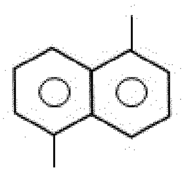
...(v)

(In the above formulae, each of $R^3$s and $R^4$s represents a substituent selected from the group consisting of a hydrogen atom, an alkyl group having from 1 to 12 carbon atoms, an alkoxy group having from 1 to 12 carbon atoms, an aryl group having from 6 to 24 carbon atoms, a halogen group and a reactive functional group; and $R^3$s and $R^4$s may be the same as, or different from, each other.)

The polyarylene sulfide can contain a small amount of a branching unit or a cross-linking unit represented by any one of the following formulae (I) to (III) or the like, as long as the above-described repeating unit is contained as a main structural unit. The amount of such a branching unit or cross-linking unit copolymerized is preferably within the range of from 0 to 1% by mole with respect to 1 mole of the unit represented by -(Ar-S)-.

[Chem 3]

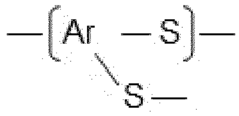
...(I)

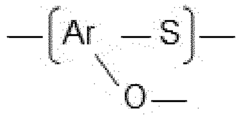
...(II)

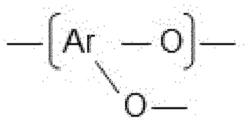
...(III)

(In the above formulae, Ar is a unit represented by the formulae (l) to (v) shown above.)

A preferred form of the polyarylene sulfide can also be, for example, one containing a reactive functional group that is bound to the above-described Ar. The reactive functional group is a structure derived from the compound (A), and will be described later in detail. The reactive functional group may be located at a position in the main chain of the polyarylene sulfide or at the end thereof, but is preferably located at the p-position with respect to S bound to Ar, when located at the end.

Further, the polyarylene sulfide in the embodiments of the present invention may be a random copolymer or a block copolymer that contains the above-described repeating unit, or a mixture thereof.

Typical examples thereof include: polyphenylene sulfide, polyphenylene sulfide sulfone and polyphenylene sulfide ketone; random copolymers and block copolymers thereof; and mixtures thereof. A particularly preferred polyarylene sulfide may be, for example, a polyphenylene sulfide that contains, as a main structural unit of the polymer, a p-phenylene sulfide unit represented by the following formula:

[Chem 4]

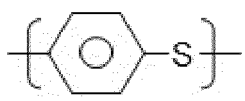

in an amount of 80% by mole or more, and particularly 90% by mole or more.

The method of producing a polyarylene sulfide according to the present invention will now be described specifically, but the method is not limited to the following method.

First, raw materials used in the production of a polyarylene sulfide will be described.

[Inorganic Sulfurizing Agent]

The inorganic sulfurizing agent to be used in the method of producing a polyarylene sulfide according to the present invention may be any inorganic sulfurizing agent capable of introducing a sulfide bond into a dihalogenated aromatic compound, and may be, for example, an alkali metal sulfide, an alkali metal hydrosulfide or hydrogen sulfide.

Specific examples of the alkali metal sulfide include lithium sulfide, sodium sulfide, potassium sulfide, rubidium sulfide, cesium sulfide, and mixtures of two or more kinds of these sulfides. Among these, lithium sulfide and/or sodium

sulfide is/are preferably used, and sodium sulfide is more preferably used. Such an alkali metal sulfide can be used as a hydrate or an aqueous mixture, or in the form of an anhydride. The "aqueous mixture" refers to an aqueous solution, a mixture of an aqueous solution and a solid component, or a mixture of water and a solid component. Since a generally available, inexpensive alkali metal sulfide is a hydrate or an aqueous mixture, it is preferred to use an alkali metal sulfide in such a form.

Specific examples of the alkali metal hydrosulfide include lithium hydrosulfide, sodium hydrosulfide, potassium hydrosulfide, rubidium hydrosulfide, cesium hydrosulfide, and mixtures of two or more kinds of these hydrosulfides. Among these, lithium hydrosulfide and/or sodium hydrosulfide is/are preferably used, and sodium hydrosulfide is more preferably used.

Further, it is possible to use an alkali metal sulfide prepared from an alkali metal hydrosulfide and an alkali metal hydroxide in a reaction system. It is also possible to use an alkali metal sulfide prepared in advance by bringing an alkali metal hydrosulfide into contact with an alkali metal hydroxide. Such an alkali metal hydrosulfide or alkali metal hydroxide can be used as a hydrate or an aqueous mixture, or in the form of an anhydride. A hydrate or an aqueous mixture is preferred from the viewpoint of the ease of availability and cost.

Still further, it is possible to use an alkali metal sulfide prepared from an alkali metal hydroxide such as lithium hydroxide or sodium hydroxide and hydrogen sulfide in a reaction system. It is also possible to use an alkali metal sulfide prepared in advance by bringing an alkali metal hydroxide such as lithium hydroxide or sodium hydroxide into contact with hydrogen sulfide. Hydrogen sulfide can be used in the form of a liquid or an aqueous solution without causing any problem.

[Compound (A)]

The compound (A) to be used in the method of producing a polyarylene sulfide according to the present invention is a compound containing at least one aromatic ring, and having, on the one aromatic ring, at least one reactive functional group selected from the group consisting of amino group, carboxyl group, an acid anhydride group, isocyanate group, epoxy group and silanol group, and at least one functional group selected from the group consisting of hydroxyl group, a salt of hydroxyl group, thiol group and a salt of thiol group. The compound (A) may be any aromatic compound containing a reactive functional group to be introduced into the resulting polyarylene sulfide, and a hydroxyl group, a salt of hydroxyl group, a thiol group or a salt of thiol group that reacts with a dihalogenated aromatic compound in the polymerization reaction step to be described later. The compound (A) preferably contains an electron-donating amino group or isocyanate group as the reactive functional group, from the viewpoint of improving the reactivity of the hydroxyl group or the thiol group. Specific examples of such preferred compounds (A) include 2-aminophenol, 4-aminophenol, 3-aminophenol, o-hydroxybenzoic acid, p-hydroxybenzoic acid, m-hydroxybenzoic acid, 3-hydroxyphthalic acid, 4-hydroxyphthalic acid, 2-aminothiophenol, 4-aminothiophenol, 3-aminothiophenol, o-mercaptobenzoic acid, p-mercaptobenzoic acid, m-mercaptobenzoic acid, 3-mercaptophthalic acid, 4-mercaptophthalic acid, and these compounds in which the hydroxyl group or the thiol group is in the form of a salt of an alkali metal or an alkaline earth metal. Among these, 4-aminophenol, p-hydroxybenzoic acid, 4-aminothiophenol and p-mercaptobenzoic acid are examples of particularly preferred compounds, from the viewpoint of reactivity. It is also possible to use two or more kinds of different compounds (A) in combination, as long as the compounds have the characteristics described above. In cases where a compound containing a hydroxyl group or a thiol group is used as the compound (A), an embodiment in which an equal amount of an alkali metal hydroxide is used at the same time is preferred. In cases where a compound containing a hydroxyl group or a thiol group in the form of a salt is used as the compound (A), it is possible to form the salt in advance and then use the compound in the production of a polyarylene sulfide, or to form the salt by the reaction in a reaction vessel.

The lower limit of the amount of the compound (A) used is 0.04 moles or more, more preferably 0.06 moles or more, and still more preferably 0.08 moles or more, with respect to 1 mole of the inorganic sulfurizing agent charged. The amount of the compound (A) used is preferably equal to or higher than the above-described value, because a reactive functional group can be sufficiently introduced into the resulting polyarylene sulfide. Further, the upper limit of the amount of the compound (A) used is 0.5 moles or less, more preferably 0.45 moles or less, and still more preferably 0.4 moles or less, with respect to 1 mole of the inorganic sulfurizing agent charged. The amount of the compound (A) used is preferably equal to or lower than the above-described value, because it is possible to prevent a decrease in the molecular weight and a decrease in the mechanical properties of the resulting polyarylene sulfide.

The compound (A) can be added at any time point without particular limitation, and may be added at any of the time points during the pre-processing step, at the start of the polymerization and during the polymerization reaction step, to be described later, or may be added multiple times in divided doses. From the viewpoint of allowing an efficient reaction with a dihalogenated aromatic compound, however, it is more preferred to add the compound (A) at the same stage as adding the dihalogenated aromatic compound to the reaction vessel.

[Dihalogenated Aromatic Compound]

Examples of the dihalogenated aromatic compound to be used in the method of producing a polyarylene sulfide according to the present invention include: dihalogenated benzenes such as p-dichlorobenzene, o-dichlorobenzene, m-dichlorobenzene, p-dibromobenzene, o-dibromobenzene, m-dibromobenzene, 1-bromo-4-chlorobenzene and 1-bromo-3-chlorobenzene; and dihalogenated aromatic compounds containing a substituent other than a halogen, such as 1-methoxy-2,5-dichlorobenzene, 1-methyl-2,5-dichlorobenzene, 1,4-dimethyl-2,5-dichlorobenzene, 1,3-dimethyl-2,5-dichlorobenzene, 2,5-dichlorobenzoic acid, 3,5-dichlorobenzoic acid, 2,5-dichloroaniline, 3,5-dichloroaniline and bis(4-chlorophenyl) sulfide. Among these, a dihalogenated aromatic compound containing a p-dihalogenated benzene typified by p-dichlorobenzene, as a main component, is preferred. Particularly preferred is a dihalogenated aromatic compound containing from 80 to 100% by mole of p-dichlorobenzene, and still more preferred is one containing from 90 to 100% by mole of p-dichlorobenzene. It is also possible to use two or more kinds of different dihalogenated aromatic compounds in combination.

The lower limit of the amount of the dihalogenated aromatic compound used is not particularly limited. However, the dihalogenated aromatic compound is preferably used in such an amount that the [monomer ratio] represented by the following formula is 0.8 or more, more preferably 0.9 or more, and still more preferably 0.95 or more. The [monomer ratio] is preferably within the range described above, because it allows for stabilizing the polymerization reaction system, and to prevent the occurrence of side reactions. Further, the upper limit of the amount of the dihalogenated aromatic compound used is not particularly limited. However, the dihalogenated aromatic compound is preferably used in such an amount that the [monomer ratio] is 1.2 or less, more preferably 1.1 or less, and still more preferably 1.05 or less. The [monomer ratio] is preferably within the range described above, because it allows for reducing the amount of halogen remaining in the resulting polyarylene sulfide. Each of the [amount of substance of dihalogenated aromatic compound], the [amount of substance of inorganic sulfurizing agent] and the [amount of substance of compound (A)] in the following formula represents the amount of each compound to be used in the production of the polyarylene sulfide.

[Monomer ratio] = [amount of substance of dihalogenated aromatic compound] / ([amount of substance of inorganic sulfurizing agent] + [amount of substance of compound (A)]).

[Organic Polar Solvent]

The organic polar solvent to be used in the method of producing a polyarylene sulfide according to the present invention may preferably be, for example, an organic amide solvent. Specific examples thereof include: N-alkylpyrrolidones such as N-methyl-2-pyrrolidone, N-ethyl-2-pyrrolidone and N-cyclohexyl-2-pyrrolidone; caprolactams such as N-methyl-ε-caprolactam; aprotic organic solvents typified, for example, by 1,3-dimethyl-2-imidazolidinone, N,N-dimethylacetamide, N,N-dimethylformamide and hexamethylphosphoric acid triamide; and mixtures of these solvents; which are preferably used because of their high reaction stability. Among these solvents, N-methyl-2-pyrrolidone and 1,3-dimethyl-2-imidazolidinone are preferably used, and N-methyl-2-pyrrolidone is more preferably used.

The amount of the organic polar solvent used is preferably 2.0 moles or more, more preferably 2.2 moles or more, and still more preferably 2.3 moles or more, with respect to 1 mole of the inorganic sulfurizing agent charged. The amount of the organic polar solvent used is preferably equal to or higher than the above-described value, because it allows for synthesizing a polyarylene sulfide with a good yield. Further, the amount of the organic polar solvent used is preferably 6.0 moles or less, more preferably 5.0 moles or less, and still more preferably 4.0 moles or less, with respect to 1 mole of the inorganic sulfurizing agent charged. The amount of the organic polar solvent used is preferably equal to or lower than the above-described value, because the amount of gas generated when the resulting polyarylene sulfide is heated can be reduced.

[Polymerization Aid]

The use of a polymerization aid for the purpose of obtaining a polyarylene sulfide having a relatively high degree of polymerization within a short period of time is also one of the preferred embodiments. The "polymerization aid" as used herein refers to a substance having the effect of increasing the viscosity of the resulting polyarylene sulfide. Specific examples of such a polymerization aid include organic carboxylates, water, alkali metal chlorides, organic sulfonates, alkali metal sulfates, alkaline earth metal oxides, alkali metal phosphates and alkaline earth metal phosphates. These polymerization aids can be used singly, or two or more kinds thereof can be used at the same time. Among these, an

organic carboxylate, water and an alkali metal chloride are preferred. Further, the organic carboxylate is preferably an alkali metal carboxylate, and the alkali metal chloride is preferably lithium chloride.

The "alkali metal carboxylate" refers to is a compound represented by the general formula $R(COOM)_n$ (wherein R represents an alkyl group having from 1 to 20 carbon atoms, a cycloalkyl group, an aryl group, an alkylaryl group or an arylalkyl group; M represents an alkali metal selected from the group consisting of lithium, sodium, potassium, rubidium and cesium; and n represents an integer from 1 to 3).

The alkali metal carboxylate can be used also as a hydrate, an anhydride or an aqueous solution. Specific examples of the alkali metal carboxylate include lithium acetate, sodium acetate, potassium acetate, sodium propionate, lithium valerate, sodium benzoate, and mixtures thereof.

The alkali metal carboxylate may be synthesized by adding roughly the same chemical equivalents of an organic acid and one or more compounds selected from the group consisting of an alkali metal hydroxide, an alkali metal carbonate and an alkali metal bicarbonate, and allowing the compounds to react with one another. Among the alkali metal carboxylates described above, a lithium salt has a high solubility in the reaction system and a high auxiliary effect, but is expensive. On the other hand, potassium, rubidium and cesium salts are considered to have insufficient solubility in the reaction system. Therefore, sodium acetate which is inexpensive and has an appropriate solubility in the polymerization system is most preferably used.

The amount of such an alkali metal carboxylate used, when used as the polymerization aid, is usually within the range of from 0.01 moles to 2 moles with respect to 1 mole of the inorganic sulfurizing agent charged. In view of obtaining a higher degree of polymerization, the alkali metal carboxylate is used preferably within the range of from 0.1 moles to 0.6 moles, and more preferably within the range of from 0.2 moles to 0.5 moles.

Further, the amount of water used, when used as the polymerization aid, is usually within the range of from 0.3 moles to 15 moles with respect to 1 mole of the inorganic sulfurizing agent charged. In view of obtaining a higher degree of polymerization, water is used preferably within the range of from 0.6 moles to 10 moles, and more preferably within the range of from 1 mole to 5 moles.

It is of course possible to use two or more kinds of these polymerization aids in combination. For example, the use of an alkali metal carboxylate and water in combination enables to achieve a higher molecular weight with smaller amounts of the alkali metal carboxylate and water.

Such a polymerization aid can be added at any time point without particular limitation, and may be added at any of the time points during the pre-processing step, at the start of the polymerization and during the polymerization reaction step, to be described later, or may be added multiple times in divided doses. In the case of using an alkali metal carboxylate as the polymerization aid, it is more preferred to add it at the same time as other additives, at the start of the pre-processing step or at the start of the polymerization, from the viewpoint of the ease of addition. In the case of using water as the polymerization aid, it is effective to add it after charging the dihalogenated aromatic compound, and during the polymerization reaction step.

[Polymerization Stabilizer]

A polymerization stabilizer can also be used, for the purpose of stabilizing the polymerization reaction system and preventing side reactions. The polymerization stabilizer contributes to stabilizing the polymerization reaction system, and reduces unwanted side reactions. One indication of side reactions may be, for example, the formation of thiophenol. The formation of thiophenol can be reduced by adding a polymerization stabilizer. Specific examples of the polymerization stabilizer include compounds such as alkali metal hydroxides, alkali metal carbonates, alkaline earth metal hydroxides and alkaline earth metal carbonates. Among these compounds, alkali metal hydroxides such as sodium hydroxide, potassium hydroxide and lithium hydroxide are preferred. The above-described alkali metal carboxylate also functions as a polymerization stabilizer, and thus is included in the category of the polymerization stabilizer. While it has been described above that it is particularly preferred to use an alkali metal hydroxide at the same time in the case of using an alkali metal hydrosulfide as the inorganic sulfurizing agent, an excessive amount of the alkali metal hydroxide with respect to the sulfurizing agent can also serve as a polymerization stabilizer.

These polymerization stabilizers can be used singly, or in combination of two or more kinds thereof. The polymerization stabilizer is preferably used at a proportion of usually from 0.02 moles to 0.2 moles, preferably from 0.03 moles to 0.1 moles, and more preferably from 0.04 moles to 0.09 moles, with respect to 1 mole of the inorganic sulfurizing agent charged. When the above-described proportion is too low, it results in an insufficient stabilizing effect; whereas when the proportion is too high, it leads to economic disadvantages and tends to result in a decrease in the polymer yield.

The polymerization stabilizer can be added at any time point without particular limitation, and may be added at any of the time points during the pre-processing step, at the start of the polymerization and during the polymerization reaction step, to be described later, or may be added multiple times in divided doses. However, the polymerization stabilizer is more preferably added at once at the start of the pre-processing step or at the start of the polymerization, from the viewpoint of the ease of addition.

Next, a preferred method of producing a polyarylene sulfide according to the present invention will be specifically described, in the order of the pre-processing step, polymerization reaction step, collecting step and post-processing step. However, the production method is of course not limited to this method.

[Pre-processing Step]

In the method of producing a polyarylene sulfide, the inorganic sulfurizing agent is usually used in the form of a hydrate, and it is preferred to heat a mixture containing the organic polar solvent and the inorganic sulfurizing agent to remove an excessive amount of water out of the system, before adding the dihalogenated aromatic compound.

As described above, it is also possible to use, as the inorganic sulfurizing agent, an inorganic sulfurizing agent prepared from an alkali metal hydrosulfide and an alkali metal hydroxide in situ in a reaction system, or in another vessel separate from the polymerization vessel. The preparation can be performed by any method without particular limitation, and it is possible to use, for example, a method in which an alkali metal hydrosulfide and an alkali metal hydroxide are added to an organic polar solvent, desirably in an inert gas atmosphere, within the temperature range of from normal temperature to 150°C, preferably from normal temperature to 100°C, and the resulting mixture is heated at least to a temperature of 150°C or higher, preferably from 180°C to 260°C, under normal pressure or reduced pressure to remove water by distillation. The polymerization aid may be added at this stage. Further, the reaction may be carried out with the addition of toluene or the like, in order to facilitate the removal of water by distillation.

The amount of water in the system upon completion of the pre-processing step, that is, before the polymerization reaction step, is preferably from 0.3 moles to 10.0 moles per mole of the sulfurizing agent charged. The amount of water in the system as used herein refers to the amount obtained by subtracting the amount of water removed outside the polymerization system from the amount of water charged into the polymerization system. Further, the water to be charged may be in any form, such as water, an aqueous solution or crystal water.

[Polymerization Reaction Step]

The inorganic sulfurizing agent, the dihalogenated aromatic compound and the compound (A) are allowed to react in the organic polar solvent within the temperature range of 200°C or higher and less than 290°C, to produce a polyarylene sulfide.

At the start of the polymerization reaction step, the organic polar solvent, the sulfurizing agent and the dihalogenated aromatic compound are mixed, desirably in an inert gas atmosphere, within the temperature range of from normal temperature to 240°C, preferably from 100°C to 230°C. The compound (A) and the polymerization aid may be added at this stage. These raw materials can be charged in no particular order, or can be charged at the same time.

The resulting mixture is usually heated to the temperature range of from 200°C to less than 290°C. The temperature rise rate is not particularly limited, but a rate of from 0.01°C/min to 5°C/min is usually selected, and a rate within the range of from 0.1°C/min to 3°C/min is more preferred.

In general, the mixture is heated to a final temperature of from 250°C to less than 290°C, and allowed to react at that temperature usually for 0.25 hours to 50 hours, preferably for 0.5 hours to 20 hours.

It is effective in obtaining a higher degree of polymerization to use a method in which the mixture is allowed to react at a stage before reaching the final temperature for a certain period of time, for example, at a temperature of from 200°C to 260°C, and then heated to 270°C to less than 290°C. At this time, usually a reaction time within the range of from 0.25 hours to 20 hours, preferably within the range of from 0.25 hours to 10 hours, is selected as the reaction time at a temperature of from 200°C to 260°C.

While the compound (A) can be added during the polymerization in order to adjust the molecular weight of the resulting polymer, it is more preferred to add at least a part of the compound (A) at the same stage as adding the dihalogenated aromatic compound, from the viewpoint of allowing an efficient reaction of the compound (A).

[Collecting Step]

In the method of producing a polyarylene sulfide, solids are collected from the polymerization reaction product containing the polymer, the solvent and the like, after the completion of the polymerization. The collection may be carried out using any known method.

For example, a method may be used in which the polymerization reaction product is slowly cooled after the completion of the polymerization reaction, to collect the polymer in the form of particles. The slow cooling rate at this time is not particularly limited, and is usually from about 0.1°C/min to 3°C/min. The slow cooling need not be performed at the same rate throughout the entire process of the slow cooling process. A method may be used in which the slow cooling is carried out at a rate of from 0. 1°C/min to 1°C/min until polymer particles are crystalized and precipitated, and thereafter, at a rate of from 1°C/min or more.

Performing the above-described collection under rapid cooling conditions is also one of the preferred methods. A preferred method, among such collecting methods, may be, for example, the flash method. The flash method is a method in which the polymerization reaction product in a state of a high temperature and high pressure (usually 250°C or higher and 8 $kg/cm^2$ or higher) is flashed into an atmosphere under normal pressure or reduced pressure, to collect the polymer in the form of a powder at the same time as recovering the solvent. The term "flash" as used herein refers to allowing the polymerization reaction product to spurt out from a nozzle. Specifically, the atmosphere into which the polymerization reaction product is flashed may be, for example, nitrogen or water vapor under normal pressure, and a temperature within the range of from 150°C to 250°C is usually select as the temperature at this time.

[Post-processing Step]

After being produced through the polymerization reaction step and the collecting step described above, the resulting polyarylene sulfide may be subjected to an acid treatment, a hydrothermal treatment, washing with an organic solvent, or an alkali metal or alkaline earth metal treatment.

In the case of performing an acid treatment, the treatment is carried out as follows. The acid to be used for the acid treatment of the polyarylene sulfide is not particularly limited, as long as the acid does not have the effect of decomposing the polyarylene sulfide. Examples of the acid include acetic acid, hydrochloric acid, sulfuric acid, phosphoric acid, silicic acid, carbonic acid and propyl acid. Among these acids, acetic acid and hydrochloric acid are more preferably used. On the other hand, an acid that causes the decomposition and degradation of the polyarylene sulfide, such as nitric acid, is not preferred.

The acid treatment can be carried out, for example, by a method in which the polyarylene sulfide is immersed in an acid or an aqueous solution of an acid, and if necessary, stirring or heating can also be performed. In the case of using acetic acid, for example, a sufficient effect can be obtained by immersing the powder of the polyarylene sulfide in a pH 4 aqueous solution of acetic acid that has been heated to 80°C to 200°C, followed by stirring for 30 minutes. The pH after the treatment may be 4 or more, and may be, for example, from about pH 4 to 8. In order to remove the remaining acid, salt or the like from the polyarylene sulfide that has been subjected to the acid treatment, the polyarylene sulfide is preferably washed several times with water or warm water. The water to be used for washing is preferably distilled water or deionized water, so that a preferred chemical denaturation effect on the polyarylene sulfide by the acid treatment is not impaired.

In the case of performing a hydrothermal treatment, the treatment is carried out as follows. The temperature of hot water, when the polyarylene sulfide is subjected to a hydrothermal treatment, is preferably 100°C or higher, more preferably 120°C or higher, still more preferably 150°C or higher, and particularly preferably 170°C or higher. A hot water temperature of less than 100°C is not preferred, because it results in a decrease in a preferred chemical denaturation effect on the polyarylene sulfide.

The water to be used is preferably distilled water or deionized water, in order to obtain the preferred chemical denaturation effect on the polyarylene sulfide by hot water washing. The operation for performing the hydrothermal treatment is not particularly limited. The hydrothermal treatment is performed, for example, by a method in which a predetermined amount of the polyarylene sulfide is introduced into a predetermined amount of water, and heated and stirred in a pressure container, or by a method in which the hydrothermal treatment is performed continuously. The proportion of water is preferably higher than that of the PPS resin, and usually, a liquor ratio (ratio of the weight of washing liquid with respect to the weight of dry polyarylene sulfide) of 200 g or less of the polyarylene sulfide with respect to 1 liter of water is selected.

The treatment is desirably performed under an inert atmosphere, in order to avoid an unwanted decomposition of a terminal reactive functional group. Further, the polyarylene sulfide after the completion of the hydrothermal treatment operation is preferably washed with warm water several times, in order to remove the remaining components.

In the case of performing washing with an organic solvent, the washing is carried out as follows. The organic solvent to be used for washing the polyarylene sulfide is not particularly limited, as long as the solvent does not have, for example, the effect of decomposing the polyarylene sulfide. Examples of the organic solvent to be used for washing the polyarylene sulfide include: nitrogen-containing polar solvents such as N-methyl-2-pyrrolidone, dimethylformamide and dimethylacetamide; sulfoxide/sulfone solvents such as dimethyl sulfoxide, dimethyl sulfone and sulfolane; ketone solvents such as acetone, methyl ethyl ketone, diethyl ketone and acetophenone; ether solvents such as dimethyl ether, dipropyl ether, dioxane and tetrahydrofuran; halogen solvents such as chloroform, methylene chloride, trichloroethylene, ethylene dichloride and perchloroethylene; alcohol solvents such as methanol, ethanol, propanol, butanol, pentanol, ethylene glycol and propylene glycol; and aromatic hydrocarbon solvents such as benzene, toluene and xylene. Among these organic solvents, N-methyl-2-pyrrolidone, acetone, dimethylformamide, chloroform and the like are particularly preferably used. These organic solvents may be used singly, as a mixture of two or more kinds thereof, or as a mixture with water.

The washing with an organic solvent can be carried out, for example, by a method in which the polyarylene

sulfide is immersed in the organic solvent, and if necessary, stirring or heating can also be performed, as appropriate. The washing temperature when the polyarylene sulfide is washed with an organic solvent is not particularly limited, and an arbitrary temperature of from about normal temperature to 300°C can be selected. While a higher washing temperature tends to result in a higher washing efficiency, a sufficient effect can usually be obtained with a washing temperature of from normal temperature to 150°C. It is also possible to carry out washing under pressure in a pressure container, at a temperature equal to or higher than the boiling point of the organic solvent. Further, the washing time is not particularly limited, as well. In the case of batch-type washing, a sufficient effect can usually be obtained by washing for 5 minutes or more, although it varies depending on the washing conditions. The washing can also be carried out by continuous washing. In the post-processing step, it is preferred to perform any one of the acid treatment, the hydrothermal treatment and the washing with an organic solvent. From the viewpoint of removing impurities, it is preferred to perform two or more kinds of these treatments in combination.

The alkali metal or alkaline earth metal treatment can be carried out, for example, by: a method of adding an alkali metal salt or an alkaline earth metal salt before, during or after the pre-processing step described above; a method of adding an alkali metal salt or an alkaline earth metal salt into a polymerization vessel before, during or after the polymerization reaction step described above; or a method of adding an alkali metal salt or an alkaline earth metal salt at the initial stage, the middle stage or the final stage of the washing step described above. In particular, the easiest method may be, for example, a method of adding an alkali metal salt or an alkaline earth metal salt, after removing the remaining oligomers and the remaining salts by washing with an organic solvent or by washing with warm water or hot water. The alkali metal or the alkaline earth metal is preferably introduced into the polyarylene sulfide in the form of an alkali metal ion or an alkaline earth metal ion such as an acetate, a hydroxide or a carbonate. Further, an excessive amount of the alkali metal salt or the alkaline earth metal salt is preferably removed by warm water washing or the like. The concentration of the alkali metal ion or the alkaline earth metal ion at the time of introducing the alkali metal or the alkaline earth metal is preferably 0.001 mmol or more, and more preferably 0.01 mmol or more, with respect to 1 g of the polyarylene sulfide. The temperature at this time is preferably 50°C or higher, more preferably 75°C or higher, and particularly preferably 90°C or higher. The upper limit temperature is not particularly specified, but 280°C or lower is usually preferred from the viewpoint of operability. The liquor ratio (ratio of the weight of washing liquid with respect to the weight of dry polyarylene sulfide) is preferably 0.5 or more, more preferably 3 or more, and still more preferably 5 or more.

[Thermal Oxidation Cross-linking Treatment]

In addition, it is also possible to subject the polyarylene sulfide in the present invention to a thermal oxidation cross-linking treatment by heating in an oxygen atmosphere or by heating with the addition of a cross-linking agent such as a peroxide, after the completion of the polymerization, to increase the molecular weight before use. However, the polyarylene sulfide preferably has a number average molecular weight of 30,000 or less, the details of which will be described later.

The polyarylene sulfide obtained by the production method according to the present invention can be used as a raw material for a resin composition, polymer modification, copolymerization or the like. While it cannot be generally defined since a preferred molecular weight varies depending on the application, the polyarylene sulfide preferably has a number average molecular weight of 1,000 or more, and more preferably 2,000 or more. The number average molecular weight of the polyarylene sulfide is preferably 1,000 or more, because a sufficient chemical resistance can be obtained. The upper limit value of the number average molecular weight of the polyarylene sulfide is preferably 50,000 or less, and more preferably 30,000 or less. The number average molecular weight of the polyarylene sulfide is preferably 50,000 or less, because it tends to prevent an excessive increase in melt viscosity, and to facilitate forming processing. The number average molecular weight Mn is a value calculated by gel permeation chromatography (GPC), which is one kind of size exclusion chromatography (SEC), in terms of polystyrene.

The polyarylene sulfide obtained by the production method according to the present invention preferably contains 400 μmol/g or more, more preferably 500 μmol/g or more, still more preferably 700 μmol/g or more, and yet still more preferably 1,000 μmol/g or more, of reactive functional groups. The amount of reactive functional groups is preferably equal to or higher than the lower limit value described above, because the glass transition temperature of the resulting polyarylene sulfide copolymer tends to be sufficiently increased when the polyarylene sulfide copolymer to be described later is produced. Further, the amount of reactive functional groups is preferably 5,000 μmol/g or less, more preferably 4,000 μmol/g or less, and still more preferably 3,000 μmol/g or less. The amount of reactive functional groups is preferably equal to or lower than the upper limit value described above, because it enables to prevent a decrease in the chemical resistance of the resulting polyarylene sulfide copolymer when the polyarylene sulfide copolymer to be described later is produced.

The amount of reactive functional groups in the polyarylene sulfide can be quantified by the FT-IR analysis of the polyarylene sulfide, for example, by comparing the intensity of the absorption derived from each reactive functional

group with respect to that of the absorption in the vicinity of 1,900 $m^{-1}$ derived from the benzene ring. For example, the absorption at 1730 $cm^{-1}$ can be used in the case of carboxyl group, the absorption at 3360 $cm^{-1}$ can be used in the case of amino group, and the absorption at 1725 $cm^{-1}$ can be used in the case of an acid anhydride group. Among these groups, the polyarylene sulfide preferably contains amino groups as reactive functional groups.

The halogen content in the polyarylene sulfide obtained by the production method according to the present invention is preferably 8,000 ppm or less, more preferably 5,000 ppm or less, and still more preferably 3,000 ppm or less. When the polyarylene sulfide copolymer to be described later is produced using a polyarylene sulfide having a halogen content within the range described above, a high molecular weight polymer can be easily obtained, and thus is preferred. The reason for this is not clear; however, it is thought that the probability of a functional group being present at the polymer end increases when the amount of halogen present at the polymer end is small, making the copolymerization reaction more likely to occur. There is no lower limit for the halogen content in the polyarylene sulfide, but the halogen content can be, for example, 500 ppm or more. The halogen content in the polyarylene sulfide can be measured, for example, using an apparatus in which a combustion apparatus and ion chromatography are combined. The halogen content in the polyarylene sulfide is derived from the dihalogenated aromatic compound as a raw material, and can be adjusted by increasing or decreasing the value of the [monomer ratio] described in the section of the dihalogenated aromatic compound above.

The polyarylene sulfide obtained by the production method according to the present invention preferably has a weight reduction rate of 5 wt% or less, more preferably 4 wt% or less, and still more preferably 3 wt% or less, when heated from 30°C to 320°C at a temperature rise rate of 10°C/min. The smaller the weight reduction rate is, the more preferred, but can be, for example, 0.01 wt% or more. In the production method according to the present invention, unreacted monomers, which are prone to turn into gas components during heating, are less likely to remain in the resulting polyarylene sulfide, even in cases where a large amount of functional groups is introduced thereinto. Therefore, the weight reduction rate can be decreased as low as 5 wt% or less.

The above-described weight reduction rate can be determined by a common thermogravimetric analysis. A non-oxidizing atmosphere under normal pressure is usually used as the atmosphere in the thermogravimetric analysis. The term "non-oxidizing atmosphere" refers to an atmosphere in which the gas phase in contact with a sample has an oxygen concentration of 5% by volume or less, preferably 2% by volume or less, and more preferably does not substantially contain oxygen. An atmosphere of an inert gas such as nitrogen, helium or argon is preferably used as the non-oxidizing atmosphere. Among these, a nitrogen atmosphere is particularly preferred, from the viewpoint of economic efficiency and the ease of handleability, in particular. Further, the "normal pressure" refers to the atmospheric pressure, that is, a pressure condition of around 101.3 kPa in absolute pressure.

In the measurement of the weight reduction rate, the thermogravimetric analysis is carried out by heating the polyarylene sulfide from room temperature to an arbitrary temperature of 320°C or higher at a temperature rise rate 10°C/min. The above-described temperature range is a temperature region frequently used when a polyarylene sulfide typified by polyphenylene sulfide is actually used, or when performing the molding or the reaction thereof in a molten state. The weight reduction rate in such an actually-used temperature region serves as an index of the amount of gas generated from the polyarylene sulfide when actually used, or of the degree of contamination of equipment during the molding or the reaction thereof. Therefore, it can be said that a polyarylene sulfide having a low weight reduction rate in such a temperature range is an excellent polyarylene sulfide with a high quality.

[Method of Producing Polyarylene Sulfide Copolymer]

It is also possible to produce a polyarylene sulfide copolymer by: obtaining a polyarylene sulfide containing a reactive functional group by the production method according to the present invention; then mixing the polyarylene sulfide with at least one or more compounds (B) (hereinafter, each also abbreviated as "compound (B)") selected from compounds represented by the following formulae (a) to (k); and heating the resulting mixture.

[Chem 5]

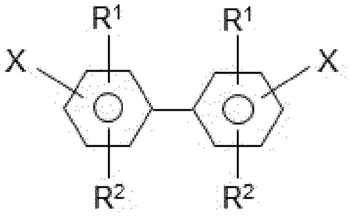
... (a)

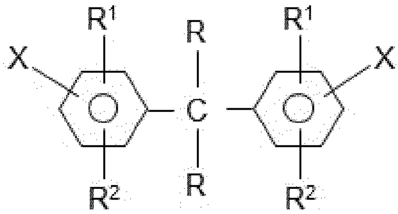
... (b)

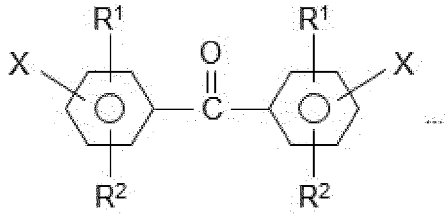
... (c)

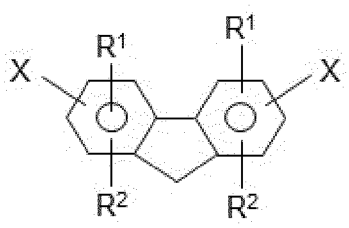
... (d)

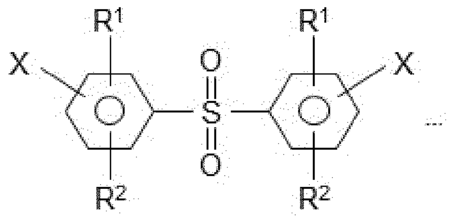
... (e)

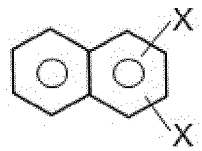
... (f)

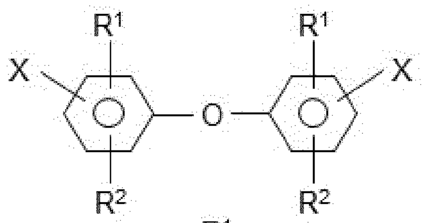
... (g)

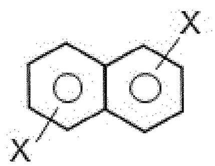
... (h)

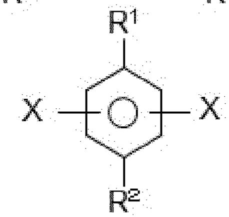
... (i)

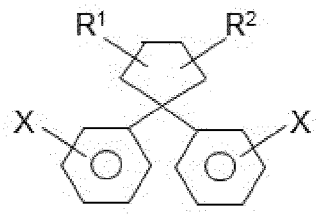
... (j)

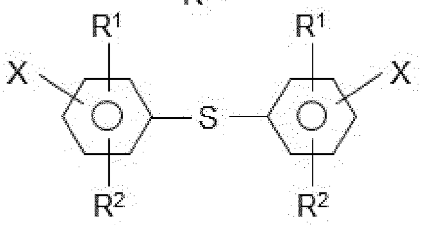
... (k)

In the above formulae, each X represents any one selected from the group consisting of a hydroxyl group, a carboxyl group, a silanol group, a sulfonic acid group, an amino group, an acid anhydride group, an acetamide group, a sulfonamide group, a cyano group, an isocyanate group, an aldehyde group, an acetyl group, an epoxy group and an alkoxysilane group. Each X is preferably an amino group or an acid anhydride group, from the viewpoint of the reactivity with the polyarylene sulfide. Each aromatic ring of each of the compounds represented by the formulae (a) to (k) may be a 2-substituted ring or a 3-substituted ring, and a plurality of substituents X substituted into one aromatic ring may be the same as, or different from, each other. Each of Rs, $R^1$s and $R^2$s represents a substituent selected from the group consisting of a hydrogen atom, an alkyl group having from 1 to 12 carbon atoms, an aryl group having from 6 to 24 carbon atoms and a halogen group, and Rs, $R^1$s and $R^2$s may be the same as, or different from, each other. From the viewpoint of the ease of availability, each of Rs, $R^1$s and $R^2$s is preferably a hydrogen atom, a methyl group, an ethyl group or a propyl group.

Specific examples of the compound (B) include p-phenylenediamine, 4,4'-diaminodiphenyl sulfide, 4,4'-diaminodiphenyl sulfone, 4,4'-diaminobenzophenone, 4,4'-diaminodiphenylmethane, 4,4'-diaminodiphenyl ether, 2,7-diaminofluorene, o-toluidine, 1,5-diaminonaphthalene, p-benzenediol, 4,4'-dihydroxydiphenyl sulfide, 4,4'-dihydroxydiphenyl sulfone, 4,4'-dihydroxybenzophenone, 4,4'-dihydroxydiphenylmethane, 4,4'-dihydroxydiphenyl ether, 2,7-dihydroxyfluorene, 4,4'-dihydroxybiphenyl, 1,5-dihydroxynaphthalene, pyromellitic acid, 3,3',4,4'-thiodiphthalic acid, 3,3',4,4'-sulfonyldiphthalic acid, 3,3',4,4'-benzophenonetetracarboxylic acid, 3,3',4,4'-sulfinyldiphthalic acid, 3,3',4,4'-biphenyltetracarboxylic dianhydride, 3,3',4,4'-tetracarboxyldiphenylmethane dianhydride, 9,9-bis(3,4-dicarboxyphenyl)fluorene dianhydride, pyromellitic anhydride, 3,3',4,4'-thiodiphthalic dianhydride, 3,3',4,4'-sulfonyldiphthalic dianhydride, 3,3',4,4'-benzophenonetetracarboxylic dianhydride, 3,3',4,4'-sulfinyldiphthalic dianhydride, 3,3',4,4'-biphenyltetracarboxylic dianhydride, 3,3',4,4'-tetracarboxyldiphenylmethane dianhydride, 9,9-bis(3,4-dicarboxyphenyl)fluorene dianhydride, 4,4'-thiodibenzoic acid, 4,4'-dicarboxyl benzophenone, 4,4'-sulfinyldibenzoic acid and 4,4'-dicarboxyl biphenyl. From the viewpoint of reactivity, 4,4'-diaminodiphenyl sulfone, 4,4'-diaminobenzophenone, 2,7-diaminofluorene, o-toluidine, 3,3',4,4'-thiodiphthalic dianhydride, 3,3',4,4'-benzophenonetetracarboxylic dianhydride, 3,3',4,4'-sulfinyldiphthalic dianhydride, 3,3',4,4'-biphenyltetracarboxylic dianhydride, 9,9-bis(3,4-dicarboxyphenyl)fluorene dianhydride, 4,4'-thiodibenzoic acid, 4,4'-dicarboxyl benzophenone, 4,4'-sulfinyldibenzoic acid, 4,4'-dicarboxylbiphenylpyromellitic acid and pyromellitic anhydride are preferably used.

The lower limit value of the amount of the compound (B) incorporated is preferably 0.5% by moles or more, more preferably 1% by mole or more, and still more preferably 2% by moles or more, with respect to the amount of sulfur atoms in the polyarylene sulfide. The upper limit value of the amount of the compound (B) incorporated is preferably 30% by moles or less, more preferably 20% by moles or less, and still more preferably 15% by moles or less, with respect to the amount of sulfur atoms in the polyarylene sulfide. When the added amount of the compound (B) is equal to or higher than the lower limit value described above, a decrease in the rigidity of the resulting polyarylene sulfide copolymer at a high temperature can be sufficiently reduced. While a higher amount of the compound (B) incorporated tends to result in a decrease in the chemical resistance of the resulting polyarylene sulfide copolymer, it is possible to easily produce a polyarylene sulfide copolymer that exhibits sufficient mechanical properties and chemical resistance by adjusting the added amount of the compound (B) within the range described above. In the production method, a heating temperature of 200°C or higher is selected. The heating temperature is preferably 230°C or higher, and more preferably 250°C or higher. The upper limit of the heating temperature may be, for example, 400°C or lower, preferably 380°C or lower, and more preferably 360°C or lower. A heating temperature of 200°C or higher enables to easily facilitate the reaction of the polyarylene sulfide with the compound (B), and a heating temperature of equal to or higher than the melting temperature of the polyarylene sulfide allows the reaction to be completed within a shorter period of time, and thus are preferred. While the melting temperature of the polyarylene sulfide cannot be uniquely defined since it varies depending on the composition and the molecular weight of the polyarylene sulfide as well as the environment during heating, it is possible to grasp the melting temperature, for example, by analyzing the polyarylene sulfide using a differential scanning calorimeter. However, too high a temperature tends to make unwanted side reactions, typified by a cross-linking reaction, for example, between the molecules of the polyarylene sulfide, and the decomposition reaction of the polyarylene sulfide, more likely to occur, possibly causing a decrease in the properties of the resulting polyarylene sulfide copolymer. Therefore, it is desirable to avoid a temperature at which such unwanted side reactions occur significantly. While the period of time for performing the above-described heating cannot be uniquely defined since it varies depending on the composition and the molecular weight of the polyarylene sulfide as well as the environment during heating, it is preferred to set the heating time such that the above-described unwanted side reactions can be prevented as much as possible. The heating time may be, for example, from 0.01 to 100 hours, preferably from 0.1 to 20 hours, and more preferably from 0.1 to 10 hours. A heating time of less than 0.01 hours tends to result in an insufficient reaction between the polyarylene sulfide and the compound (B), whereas a heating time of more than 100 hours not only tends to increase the likelihood that adverse effects on the properties of the resulting polyarylene sulfide copolymer due to unwanted side reactions become more obvious, but also may cause economic disadvantages.

In the method of producing a polyarylene sulfide copolymer according to the present invention, it is preferred that an imide group be formed by the reaction of a functional group contained in the polyarylene sulfide with X contained in the compound (B). The combination that forms an imide group is not particularly limited, as long as an imide group can be formed. However, it is preferred that the combination of a functional group contained in the polyarylene sulfide and X contained in the compound (B) be a combination of an acid anhydride group and an amino group, or a combination of a carboxyl group and an amino group. A combination of an acid anhydride group and an amino group is particularly preferred.

The heating in the method of producing a polyarylene sulfide copolymer according to the present invention is preferably carried out in the absence of a solvent, from the viewpoint of preventing the contamination of the resulting molded article due to the gas generated during molding. Further, the heating is not limited to the method described above, and can also be carried out in the presence of a solvent. The solvent is not particularly limited, as long as the solvent does not substantially cause unwanted side reactions, such as the decomposition or cross-linking of the polyarylene sulfide copolymer produced. It is possible to use one kind of solvent, or two or more kinds of solvents as a mixture.

The heating in the method of producing a polyarylene sulfide copolymer according to the present invention may be carried out, of course by a method of using a common polymerization reactor, or within a mold in which a molded article is produced. Alternatively, the heating can be carried out using any apparatus equipped with a heating mechanism without particular limitation, for example, using an extruder or a melt kneader, and a known method such as a batch process or a continuous process can be employed.

The heating in the method of producing a polyarylene sulfide copolymer according to the present invention is preferably carried out in a non-oxidizing atmosphere, and preferably carried out under a reduced pressure condition, as well. In the case of carrying out the heating under a reduced pressure condition, it is preferred to set the atmosphere in the reaction system to a non-oxidizing atmosphere first, and then to a reduced pressure condition. This tends to allow for a decrease in the occurrence of unwanted side reactions, such as a cross-linking reaction, for example, between the molecules of the polyarylene sulfide, and the decomposition reaction of the polyarylene sulfide. The term "non-oxidizing atmosphere" refers to an atmosphere in which the gas phase has an oxygen concentration of 5% by volume or less, preferably 2% by volume or less, and more preferably does not substantially contain oxygen, that is, an atmosphere of an inert gas such as nitrogen, helium or argon. Among these, a nitrogen atmosphere is preferred, particularly from the viewpoint of economic efficiency and the ease of handling. The expression "under a reduced pressure condition" means that the pressure in the system where the reaction is carried out is lower than the atmospheric pressure, and the upper limit of the pressure is preferably 50 kPa or less, more preferably 20 kPa or less, and still more preferably 10 kPa or less. The lower limit of the pressure may be, for example, 0.1 kPa or more. A reduced pressure condition of lower than the preferred upper limit tends to allow for reducing the occurrence of unwanted side reactions, such as a cross-linking reaction, whereas a reduced pressure condition of equal to or higher than the preferred lower limit prevents a load due to reduced pressure from being applied to the reactor more than necessary, and thus are preferred.

The polyarylene sulfide copolymer obtained by the production method according to the present invention preferably has a glass transition temperature of 95°C or higher, more preferably 100°C or higher, and still more preferably 110°C or higher. The glass transition temperature is preferably 95°C or higher, because a high rigidity under a high temperature condition can be obtained. Further, the polyarylene sulfide copolymer preferably has a glass transition temperature of 190°C or lower, more preferably 180°C or lower, and still more preferably 160°C or lower. The glass transition temperature is preferably 190°C or lower, because the chemical resistance of the resulting molded article can be maintained. The term "glass transition temperature" as used herein is defined as the point of inflection of the base line shift detected when the polyarylene sulfide copolymer is heated from 0°C to 340°C at a rate of 20°C/min, using a differential scanning calorimeter. Further, the polyarylene sulfide copolymer obtained by the production method according to the present invention preferably has a melting point of 300°C or lower, or does not have a melting point. The fact that the polyarylene sulfide copolymer has a melting point of 300°C or lower, or does not have a melting point, facilitates the melt molding of the copolymer. The term "melting point" as used herein is defined as the value of the melting peak temperature detected when the polyarylene sulfide copolymer is heated from 0°C to 340°C at a rate of 20°C/min, then maintained at 340°C for 1 minute, cooled to 100°C at a rate of 20°C/min, then maintained at 100°C for 1 minute and then heated to 340°C again at a rate of 20°C/min, using a differential scanning calorimeter. The expression "does not have a melting point" is defined to mean that no clear melting peak is observed when the measurement is carried out under the above-described conditions using a differential scanning calorimeter. The melting point can be adjusted by selecting the molecular weight of the arylene sulfide units in the polyarylene sulfide copolymer.

The polyarylene sulfide copolymer obtained by the production method according to the present invention preferably has a molecular weight, as a weight average molecular weight, of 10,000 or more, more preferably 20,000 or more, still more preferably 30,000 or more, yet still more preferably 40,000 or more, and yet still more preferably 45,000 or more. The weight average molecular weight is preferably 10,000 or more, because the polyarylene sulfide copolymer tends to have sufficiently high toughness and mechanical strength. While the upper limit is not particularly limited, the polyarylene sulfide copolymer may preferably have, for example, a weight average molecular weight within the range of less than 1,000,000, more preferably less than 500,000, and still more preferably less than 200,000. The weight average molecular weight is preferably within the above range, because an excellent formability can be obtained.

The weight average molecular weight described above can be determined, for example, by SEC (size exclusion chromatography) with a differential refractive index detector.

The polyarylene sulfide and the polyarylene sulfide copolymer obtained by the production methods according to the present invention can each be used as a polyarylene sulfide resin composition, by incorporating a filler and other additives thereto. The method of incorporating a filler and other additives in the production of a resin composition is not particularly limited. Typical examples of thereof include a method of supplying a filler and other additives to a known melt kneader, such as single-screw or twin-screw extruder, a Banbury mixer, a kneader or a mixing roll, and kneading the resulting mixture at a processing temperature which is the melting peak temperature of the polyarylene sulfide copolymer + 5 to 100°C.

The filler may be, for example, an inorganic filler or an organic filler.

The type of the filler is not particularly limited. In view of the reinforcing effect as a resin composition provided

by the filler, however, fibrous inorganic fillers such as glass fibers and carbon fibers are preferred. Carbon fibers not only have the effect of improving the mechanical properties, but also have the effect of reducing the weight of the resulting molded article. In addition, the use of carbon fibers as the filler enables to obtain a much higher effect of improving the mechanical properties and the chemical resistance of the resin composition, and thus is more preferred.

The polyarylene sulfide and the polyarylene sulfide copolymer obtained by the present invention have an excellent heat resistance, chemical resistance, flame retardancy, electrical properties and mechanical properties, and not only can be used in injection molding, injection compression molding and blow molding applications, but also can be formed into extrusion molded articles, such as sheets, films, fibers and pipes, by extrusion molding.

Further, the resin composition using the polyarylene sulfide or the polyarylene sulfide copolymer obtained by the present invention can be used, for example, in electric and electronic components, audio equipment parts, pars for household and office electrical products, machine-related parts, optical devices, precision machine-related parts, plumbing parts, automobile and vehicle-related parts, aerospace-related parts, and various types of other applications.

Examples

The methods according to the present invention will be described more specifically, with reference to Examples and Comparative Examples. However, the present invention is in no way limited to these Examples alone.

[Analysis of Functional Group Content]

The amount of functional groups introduced into each polyarylene sulfide was estimated by performing a measurement using an amorphous film of the polyarylene sulfide produced by rapidly cooling from a molten state, by FT-IR (an infrared spectrophotometer, IR-810, manufactured by JASCO Corporation), and by comparing the absorption derived from each functional group with respect to the absorption in the vicinity of 1,900 $cm^{-1}$ derived from the benzene ring. The absorption peak at 3360 $cm^{-1}$ was used in the case of amino group, and the absorption peak at 1725 $cm^{-1}$ was used in the case of an acid anhydride group, for the calculation.

[Measurement of Molecular Weight]

The number average molecular weight Mn of each polyarylene sulfide and the weight average molecular weight Mw of each polyarylene sulfide copolymer were calculated by gel permeation chromatography (GPC), which is one kind of size exclusion chromatography (SEC), in terms of polystyrene. GPC measurement conditions are shown below:

Apparatus: SSC-7110, manufactured by Senshu Scientific Co., Ltd.
Column name: Shodex UT806M × 2
Eluent: 1-chloronaphthalene
Detector: differential refractive index detector
Column temperature: 210°C
Pre-thermostatic chamber temperature: 250°C
Pump thermostatic chamber temperature: 50°C
Detector temperature: 210°C
Flow rate: 1.0 mL/min
Sample injection volume: 300 μL.

[Analysis of Remaining Amount of Functional Group-containing Monomers]

The amount of reactive functional group-containing monomers remaining in the polymerization reaction product obtained after the completion of the polymerization step of each polyarylene sulfide was quantified using a gas chromatograph, GC-2010 PLUS, manufactured by Shimadzu Corporation, and the remaining rate was calculated from the charged amount.

[Measurement of Weight Reduction Rate During Heating]

The weight reduction rate of each polyarylene sulfide during heating was measured using a thermogravimetric analyzer, under the following conditions: Apparatus: TGA7, manufactured by PerkinElmer, Inc.

Measurement Atmosphere: under nitrogen gas stream
Charged weight of sample: about 5 mg

Measurement conditions

(a) Maintaining at a program temperature of 30°C for 1 minute
(b) Heating from a program temperature of 30°C, to 340°C. Temperature rise rate at this time: 10°C/min.

The weight reduction rate was determined from the weight at the time point of 320°C and the weight at the time point of 30°C measured under the above-described conditions, by the following equation:

$$\text{Weight reduction rate (\%)} = ((\text{weight at the time point of } 30°C \text{ (mg)} - \text{weight at the time point of } 320°C \text{ (mg)}) / \text{weight at the time point of } 30°C \text{ (mg)}) \times 100.$$

[Analysis of Halogen Content in Polymer]

A quantity of from 1 to 2 mg of each polymer was burned at a final temperature of 1,000°C, using an automatic sample combustion apparatus, AQF-100, manufactured by Dia Instruments Co., Ltd., and the generated gas components were allowed to be adsorbed by 10 mL of water containing a thin oxidizing agent. The resulting adsorbed liquid was supplied to an ion chromatography system, ICS 1500, manufactured by DIONEX, in which a mixed aqueous solution of sodium carbonate and sodium hydrogen carbonate was used as a mobile phase, to measure the halogen content in the polymer.

[Example 1]

Into a 70-liter autoclave equipped with a stirrer and a bottom stop valve, 10.40 kg (88.0 moles) of 47.5% sodium hydrosulfide, 4.15 kg (99.6 moles) of 96% sodium hydroxide, 20.82 kg (210 moles) of N-methyl-2-pyrrolidone (NMP) and 5.96 kg of ion exchanged water were charged. The resulting mixture was gradually heated to 225°C over about 3 hours, while passing nitrogen therethrough at normal pressure, and the heating was stopped and cooling was started at a time point when 9.82 kg of water and 0.28 kg of NMP were distilled off. Since the amount of hydrogen sulfide volatilized away at this time point was 2.1 moles, the amount of the inorganic sulfurizing agent in the system after the present step was 85.9 moles.

Thereafter, the resultant was cooled to 200°C, and 13.5 kg (91.8 moles) of p-dichlorobenzene (p-DCB), 1.46 kg (11.7 moles) of 4-aminothiophenol (4-ATP) and 7.93 kg (80.0 moles) of NMP were added thereto, followed by sealing the reaction vessel under nitrogen gas. The mixture was then heated to 260°C at a rate of 0.6°C/min while stirring at 240 rpm, and allowed to react at 260°C for 120 minutes.

After the completion of the reaction, the bottom stop valve of the autoclave was immediately opened, the contents were flashed into an apparatus equipped with a stirrer, and then dried and solidified in the apparatus equipped with a stirrer controlled to 230°C for 1.5 hours, to recover solids containing PPS and salts.

The resulting recovered product and ion exchanged water were placed in an autoclave equipped with a stirrer, and the operation of washing at 75°C for 15 minutes and then filtering was repeated 3 times, to obtain a cake. The resulting cake and ion exchanged water were placed in an autoclave equipped with a stirrer, and then heated to 195°C after replacing the interior of the autoclave with nitrogen. Subsequently, the autoclave was cooled, and the contents were retrieved. The contents were filtered to obtain a cake. The resulting cake was dried at 120°C under a nitrogen gas stream, to obtain dry PPS.

[Example 2]

Into a 70-liter autoclave equipped with a stirrer and a bottom stop valve, 8.27 kg (70.0 moles) of 47.5% sodium hydrosulfide, 3.22 kg (77.3 moles) of 96% sodium hydroxide, 14.57 kg (147 moles) of N-methyl-2-pyrrolidone (NMP) and 4.47 kg of ion exchanged water were charged. The resulting mixture was gradually heated to 225°C over about 3 hours, while passing nitrogen therethrough at normal pressure, and the heating was stopped and cooling was started at a time point when 12.37 kg of water and 0.28 kg of NMP were distilled off. Since the amount of hydrogen sulfide volatilized away at this time point was 2.1 moles, the amount of the inorganic sulfurizing agent in the system after the present step was 67.9 moles.

Thereafter, the resultant was cooled to 200°C, and 13.5 kg (72.63 moles) of p-dichlorobenzene (p-DCB), 0.86 kg (6.85 moles) of 4-aminothiophenol (4-ATP) and 5.55 kg (56.0 moles) of NMP were added thereto, followed by sealing the reaction vessel under nitrogen gas. The mixture was then heated to 260°C at a rate of 0.6°C/min while stirring at 240 rpm, and allowed to react at 260°C for 120 minutes.

After the completion of the reaction, the bottom stop valve of the autoclave was immediately opened, the contents were flashed into an apparatus equipped with a stirrer, and then dried and solidified in the apparatus equipped with a stirrer controlled to 230°C for 1.5 hours, to recover solids containing PPS and salts.

The resulting recovered product and ion exchanged water were placed in an autoclave equipped with a stirrer, and the operation of washing at 75°C for 15 minutes and then filtering was repeated 3 times, to obtain a cake. The resulting cake and ion exchanged water were placed in an autoclave equipped with a stirrer, and then heated to 195°C after replacing the interior of the autoclave with nitrogen. Subsequently, the autoclave was cooled, and the contents were filtered to obtain a cake. The resulting cake was dried at 120°C under a nitrogen gas stream, to obtain dry PPS.

[Example 3]

Into a 70-liter autoclave equipped with a stirrer and a bottom stop valve, 11.1 kg (94.0 moles) of 47.5% sodium hydrosulfide, 4.15 kg (99.6 moles) of 96% sodium hydroxide, 20.82 kg (210 moles) of N-methyl-2-pyrrolidone (NMP) and 4.45 kg of ion exchanged water were charged. The resulting mixture was gradually heated to 225°C over about 3 hours, while passing nitrogen therethrough at normal pressure, and the heating was stopped and cooling was started at a time point when 10.07 kg of water and 0.27 kg of NMP were distilled off. Since the amount of hydrogen sulfide volatilized away at this time point was 2.2 moles, the amount of the inorganic sulfurizing agent in the system after the present step was 91.8 moles.

Thereafter, the resultant was cooled to 200°C, and 13.9 kg (94.8 moles) of p-dichlorobenzene (p-DCB), 0.72 kg (5.88 moles) of 4-aminothiophenol (4-ATP) and 7.93 kg (80.0 moles) of NMP were added thereto, followed by sealing the reaction vessel under nitrogen gas. The mixture was then heated to 260°C at a rate of 0.6°C/min while stirring at 240 rpm, and allowed to react at 260°C for 120 minutes.

After the completion of the reaction, the bottom stop valve of the autoclave was immediately opened, the contents were flashed into an apparatus equipped with a stirrer, and then dried and solidified in the apparatus equipped with a stirrer controlled to 230°C for 1.5 hours, to recover solids containing PPS and salts.

The resulting recovered product and ion exchanged water were placed in an autoclave equipped with a stirrer, and the operation of washing at 75°C for 15 minutes and then filtering was repeated 3 times, to obtain a cake. The resulting cake and ion exchanged water were placed in an autoclave equipped with a stirrer, and then heated to 195°C after replacing the interior of the autoclave with nitrogen. Subsequently, the autoclave was cooled, and the contents were filtered to obtain a cake. The resulting cake was dried at 120°C under a nitrogen gas stream, to obtain dry PPS.

[Example 4]

Into a 70-liter autoclave equipped with a stirrer and a bottom stop valve, 8.26 kg (70.0 moles) of 47.5% sodium hydrosulfide, 4.13 kg (99.1 moles) of 96% sodium hydroxide, 20.82 kg (210 moles) of N-methyl-2-pyrrolidone (NMP) and 4.43 kg of ion exchanged water were charged. The resulting mixture was gradually heated to 225°C over about 3 hours, while passing nitrogen therethrough at normal pressure, and the heating was stopped and cooling was started at a time point when 8.61 kg of water and 0.26 kg of NMP were distilled off. Since the amount of hydrogen sulfide volatilized away at this time point was 2.1 moles, the amount of the inorganic sulfurizing agent in the system after the present step was 67.9 moles.

Thereafter, the resultant was cooled to 200°C, and 12.1 kg (82.6 moles) of p-dichlorobenzene (p-DCB), 3.64 kg (29.4 moles) of 4-aminothiophenol (4-ATP) and 7.93 kg (80.0 moles) of NMP were added thereto, followed by sealing the reaction vessel under nitrogen gas. The mixture was then heated to 260°C at a rate of 0.6°C/min while stirring at 240 rpm, and allowed to react at 260°C for 120 minutes.

After the completion of the reaction, the bottom stop valve of the autoclave was immediately opened, the contents were flashed into an apparatus equipped with a stirrer, and then dried and solidified in the apparatus equipped with a stirrer controlled to 230°C for 1.5 hours, to recover solids containing PPS and salts.

The resulting recovered product and ion exchanged water were placed in an autoclave equipped with a stirrer, and the operation of washing at 75°C for 15 minutes and then filtering was repeated 3 times, to obtain a cake. The resulting cake and ion exchanged water were placed in an autoclave equipped with a stirrer, and then heated to 195°C after replacing the interior of the autoclave with nitrogen. Subsequently, the autoclave was cooled, and the contents were filtered to obtain a cake. The resulting cake was dried at 120°C under a nitrogen gas stream, to obtain dry PPS.

[Example 5]

Into a 70-liter autoclave equipped with a stirrer and a bottom stop valve, 7.22 kg (62.3 moles) of 48.4% sodium hydrosulfide, 2.90 kg (70.5 moles) of 97% sodium hydroxide, 14.57 kg (147 moles) of N-methyl-2-pyrrolidone (NMP) and 4.22 kg of ion exchanged water were charged. The resulting mixture was gradually heated to 225°C over about 3

hours, while passing nitrogen therethrough at normal pressure, and the heating was stopped and cooling was started at a time point when 7.95 kg of water and 0.072 kg of NMP were distilled off. Since the amount of hydrogen sulfide volatilized away at this time point was 1.4 moles, the amount of the inorganic sulfurizing agent in the system after the present step was 60.9 moles.

Thereafter, the resultant was cooled to 200°C, and 9.51 kg (64.5 moles) of p-dichlorobenzene (p-DCB), 0.94 kg (7.55 moles) of a part of 4-aminothiophenol (4-ATP) and 5.55 kg (56.0 moles) of NMP were added thereto, followed by sealing the reaction vessel under nitrogen gas. The mixture was then heated to 260°C at a rate of 0.6°C/min while stirring at 240 rpm, and allowed to react at 260°C for 120 minutes.

After the reaction at 260°C for 120 minutes, 0.86 kg (0.69 moles) of the remaining 4-aminothiophenol (4-ATP) was injected into the reaction vessel with a pressure, along with 0.70 kg (7.06 moles) of NMP, and the resultant was allowed to react at 260°C for 60 minutes.

After the completion of the reaction, the bottom stop valve of the autoclave was immediately opened, the contents were flashed into an apparatus equipped with a stirrer, and then dried and solidified in the apparatus equipped with a stirrer controlled to 230°C for 1.5 hours, to recover solids containing PPS and salts.

The resulting recovered product and ion exchanged water were placed in an autoclave equipped with a stirrer, and the operation of washing at 75°C for 15 minutes and then filtering was repeated 3 times, to obtain a cake. The resulting cake and ion exchanged water were placed in an autoclave equipped with a stirrer, and then heated to 195°C after replacing the interior of the autoclave with nitrogen. Subsequently, the autoclave was cooled, and the contents were filtered to obtain a cake. The resulting cake was dried at 120°C under a nitrogen gas stream, to obtain dry PPS.

[Example 6]

Into a 70-liter autoclave equipped with a stirrer and a bottom stop valve, 7.14 kg (61.6 moles) of 48.4% sodium hydrosulfide, 2.87 kg (69.3 moles) of 97% sodium hydroxide, 14.57 kg (147 moles) of N-methyl-2-pyrrolidone (NMP) and 4.18 kg of ion exchanged water were charged. The resulting mixture was gradually heated to 225°C over about 3 hours, while passing nitrogen therethrough at normal pressure, and the heating was stopped and cooling was started at a time point when 7.87 kg of water and 0.014 kg of NMP were distilled off. Since the amount of hydrogen sulfide volatilized away at this time point was 1.6 moles, the amount of the inorganic sulfurizing agent in the system after the present step was 60.0 moles.

Thereafter, the resultant was cooled to 200°C, and 9.42 kg (64.1 moles) of p-dichlorobenzene (p-DCB), 1.02 kg (8.21 moles) of 4-aminothiophenol (4-ATP) and 13.2 kg (133.0 moles) of NMP were added thereto, followed by sealing the reaction vessel under nitrogen gas. The mixture was then heated to 260°C at a rate of 0.6°C/min while stirring at 240 rpm, and allowed to react at 260°C for 120 minutes.

After the completion of the reaction, the bottom stop valve of the autoclave was immediately opened, the contents were flashed into an apparatus equipped with a stirrer, and then dried and solidified in the apparatus equipped with a stirrer controlled to 230°C for 1.5 hours, to recover solids containing PPS and salts.

The resulting recovered product and ion exchanged water were placed in an autoclave equipped with a stirrer, and the operation of washing at 75°C for 15 minutes and then filtering was repeated 3 times, to obtain a cake. The resulting cake and ion exchanged water were placed in an autoclave equipped with a stirrer, and then heated to 195°C after replacing the interior of the autoclave with nitrogen. Subsequently, the autoclave was cooled, and the contents were filtered to obtain a cake. The resulting cake was dried at 120°C under a nitrogen gas stream, to obtain dry PPS.

[Example 7]

Into a 70-liter autoclave equipped with a stirrer and a bottom stop valve, 7.14 kg (61.6 moles) of 48.4% sodium hydrosulfide, 2.87 kg (69.3 moles) of 97% sodium hydroxide, 14.57 kg (147 moles) of N-methyl-2-pyrrolidone (NMP) and 4.19 kg of ion exchanged water were charged. The resulting mixture was gradually heated to 225°C over about 3 hours, while passing nitrogen therethrough at normal pressure, and the heating was stopped and cooling was started at a time point when 7.88 kg of water and 0.039 kg of NMP were distilled off. Since the amount of hydrogen sulfide volatilized away at this time point was 1.4 moles, the amount of the inorganic sulfurizing agent in the system after the present step was 60.2 moles.

Thereafter, the resultant was cooled to 200°C, and 9.45 kg (64.3 moles) of p-dichlorobenzene (p-DCB), 1.02 kg (8.23 moles) of 4-aminothiophenol (4-ATP) and 2.78 kg (28.0 moles) of NMP were added thereto, followed by sealing the reaction vessel under nitrogen gas. The mixture was then heated to 260°C at a rate of 0.6°C/min while stirring at 240 rpm, and allowed to react at 260°C for 120 minutes.

After the completion of the reaction, the bottom stop valve of the autoclave was immediately opened, the contents were flashed into an apparatus equipped with a stirrer, and then dried and solidified in the apparatus equipped with a stirrer controlled to 230°C for 1.5 hours, to recover solids containing PPS and salts.

The resulting recovered product and ion exchanged water were placed in an autoclave equipped with a stirrer, and the operation of washing at 75°C for 15 minutes and then filtering was repeated 3 times, to obtain a cake. The resulting cake and ion exchanged water were placed in an autoclave equipped with a stirrer, and then heated to 195°C after replacing the interior of the autoclave with nitrogen. Subsequently, the autoclave was cooled, and the contents were filtered to obtain a cake. The resulting cake was dried at 120°C under a nitrogen gas stream, to obtain dry PPS.

[Example 8]

Into a 70-liter autoclave equipped with a stirrer and a bottom stop valve, 10.40 kg (88.0 moles) of 47.5% sodium hydrosulfide, 4.15 kg (99.6 moles) of 96% sodium hydroxide, 20.82 kg (210 moles) of N-methyl-2-pyrrolidone (NMP) and 5.96 kg of ion exchanged water were charged. The resulting mixture was gradually heated to 225°C over about 3 hours, while passing nitrogen therethrough at normal pressure, and the heating was stopped and cooling was started at a time point when 9.82 kg of water and 0.28 kg of NMP were distilled off. Since the amount of hydrogen sulfide volatilized away at this time point was 2.1 moles, the amount of the inorganic sulfurizing agent in the system after the present step was 85.9 moles.

Thereafter, the resultant was cooled to 200°C, and 16.9 kg (114.8 moles) of p-dichlorobenzene (p-DCB), 1.46 kg (11.7 moles) of 4-aminothiophenol (4-ATP) and 7.93 kg (80.0 moles) of NMP were added thereto, followed by sealing the reaction vessel under nitrogen gas. The mixture was then heated to 260°C at a rate of 0.6°C/min while stirring at 240 rpm, and allowed to react at 260°C for 120 minutes.

After the completion of the reaction, the bottom stop valve of the autoclave was immediately opened, the contents were flashed into an apparatus equipped with a stirrer, and then dried and solidified in the apparatus equipped with a stirrer controlled to 230°C for 1.5 hours, to recover solids containing PPS and salts.

The resulting recovered product and ion exchanged water were placed in an autoclave equipped with a stirrer, and the operation of washing at 75°C for 15 minutes and then filtering was repeated 3 times, to obtain a cake. The resulting cake and ion exchanged water were placed in an autoclave equipped with a stirrer, and then heated to 195°C after replacing the interior of the autoclave with nitrogen. Subsequently, the autoclave was cooled, and the contents were filtered to obtain a cake. The resulting cake was dried at 120°C under a nitrogen gas stream, to obtain dry PPS.

[Example 9]

Into a 70-liter autoclave equipped with a stirrer and a bottom stop valve, 10.40 kg (88.0 moles) of 47.5% sodium hydrosulfide, 4.15 kg (99.6 moles) of 96% sodium hydroxide, 20.82 kg (210 moles) of N-methyl-2-pyrrolidone (NMP) and 5.96 kg of ion exchanged water were charged. The resulting mixture was gradually heated to 225°C over about 3 hours, while passing nitrogen therethrough at normal pressure, and the heating was stopped and cooling was started at a time point when 9.82 kg of water and 0.28 kg of NMP were distilled off. Since the amount of hydrogen sulfide volatilized away at this time point was 2.1 moles, the amount of the inorganic sulfurizing agent in the system after the present step was 85.9 moles.

Thereafter, the resultant was cooled to 200°C, and 13.5 kg (91.8 moles) of p-dichlorobenzene (p-DCB), 1.46 kg (11.7 moles) of 3-aminothiophenol (3-ATP) and 7.93 kg (80.0 moles) of NMP were added thereto, followed by sealing the reaction vessel under nitrogen gas. The mixture was then heated to 260°C at a rate of 0.6°C/min while stirring at 240 rpm, and allowed to react at 260°C for 120 minutes.

After the completion of the reaction, the bottom stop valve of the autoclave was immediately opened, the contents were flashed into an apparatus equipped with a stirrer, and then dried and solidified in the apparatus equipped with a stirrer controlled to 230°C for 1.5 hours, to recover solids containing PPS and salts.

The resulting recovered product and ion exchanged water were placed in an autoclave equipped with a stirrer, and the operation of washing at 75°C for 15 minutes and then filtering was repeated 3 times, to obtain a cake. The resulting cake and ion exchanged water were placed in an autoclave equipped with a stirrer, and then heated to 195°C after replacing the interior of the autoclave with nitrogen. Subsequently, the autoclave was cooled, and the contents were filtered to obtain a cake. The resulting cake was dried at 120°C under a nitrogen gas stream, to obtain dry PPS.

[Example 10]

A quantity of 3 kg of the dry PPS obtained in Example 7 and 30 kg of N-methyl-2-pyrrolidone (NMP) were placed into a container equipped with a stirrer, stirred at 50 rpm for 30 minutes, and then filtered to obtain a cake. The resulting cake was subjected to the operation of washing with 30 liters of ion exchanged water for 15 minutes and then filtering, 3 times, and then dried at 120°C for 4 hours under a nitrogen gas stream, to obtain dry PPS.

[Example 11]

Into a 70-liter autoclave equipped with a stirrer and a bottom stop valve, 10.40 kg (88.0 moles) of 47.5% sodium hydrosulfide, 4.15 kg (99.6 moles) of 96% sodium hydroxide, 20.82 kg (210 moles) of N-methyl-2-pyrrolidone (NMP) and 5.96 kg of ion exchanged water were charged. The resulting mixture was gradually heated to 225°C over about 3 hours, while passing nitrogen therethrough at normal pressure, and the heating was stopped and cooling was started at a time point when 9.82 kg of water and 0.28 kg of NMP were distilled off. Since the amount of hydrogen sulfide volatilized away at this time point was 2.1 moles, the amount of the inorganic sulfurizing agent in the system after the present step was 85.9 moles.

Thereafter, the resultant was cooled to 200°C, and 13.5 kg (91.8 moles) of p-dichlorobenzene (p-DCB), 1.28 kg (11.7 moles) of 4-aminothiophenol (4-ATP) and 7.93 kg (80.0 moles) of NMP were added thereto, followed by sealing the reaction vessel under nitrogen gas. The mixture was then heated to 260°C at a rate of 0.6°C/min while stirring at 240 rpm, and allowed to react at 260°C for 120 minutes.

After the completion of the reaction, the bottom stop valve of the autoclave was immediately opened, the contents were flashed into an apparatus equipped with a stirrer, and then dried and solidified in the apparatus equipped with a stirrer controlled to 230°C for 1.5 hours, to recover solids containing PPS and salts.

The resulting recovered product and ion exchanged water were placed in an autoclave equipped with a stirrer, and the operation of washing at 75°C for 15 minutes and then filtering was repeated 3 times, to obtain a cake. The resulting cake and ion exchanged water were placed in an autoclave equipped with a stirrer, and then heated to 195°C after replacing the interior of the autoclave with nitrogen. Subsequently, the autoclave was cooled, and the contents were filtered to obtain a cake. The resulting cake was dried at 120°C under a nitrogen gas stream, to obtain dry PPS.

[Comparative Example 1]

Into a 70-liter autoclave equipped with a stirrer and a bottom stop valve, 8.27 kg (70.0 moles) of 47.5% sodium hydrosulfide, 3.56 kg (85.5 moles) of 906% sodium hydroxide, 11.45 kg (115.50 moles) of N-methyl-2-pyrrolidone (NMP) and 5.50 kg of ion exchanged water were charged. The resulting mixture was gradually heated to 225°C over about 3 hours, while passing nitrogen therethrough at normal pressure, and the heating was stopped and cooling was started at a time point when 9.82 kg of water and 0.28 kg of NMP were distilled off. The amount of water remaining in the system at this time point per mole of the alkali metal hydrosulfide charged, was 1.01 moles including the amount of water consumed in the hydrolysis of NMP. Further, since the amount of hydrogen sulfide volatilized away at this time point was 1.4 moles, the amount of the sulfurizing agent in the system after the present step was 68.6 moles.

Thereafter, the resultant was cooled to 200°C, and 9.28 kg (65.1 moles) of p-dichlorobenzene (p-DCB), 2.88 kg (15.8 moles) of 4-chlorophthalic anhydride (4-CPA) and 9.37 kg (94.50 moles) of NMP were added thereto, followed by sealing the reaction vessel under nitrogen gas. The mixture was then heated to 275°C at a rate of 0.6°C/min while stirring at 240 rpm, and allowed to react at 275°C for 60 minutes.

After the completion of the reaction, the bottom stop valve of the autoclave was immediately opened, the contents were flashed into an apparatus equipped with a stirrer, and then dried and solidified in the apparatus equipped with a stirrer controlled to 230°C for 1.5 hours, to recover solids containing PPS and salts.

The resulting recovered product and ion exchanged water were placed in an autoclave equipped with a stirrer, and the operation of washing at 75°C for 15 minutes and then filtering was repeated 3 times, to obtain a cake. The resulting cake and ion exchanged water were placed in an autoclave equipped with a stirrer, and then heated to 195°C after replacing the interior of the autoclave with nitrogen. Subsequently, the autoclave was cooled, and the contents were filtered to obtain a cake. The resulting cake was dried at 120°C under a nitrogen gas stream, to obtain dry PPS.

[Comparative Example 2]

Into a 70-liter autoclave equipped with a stirrer and a bottom stop valve, 8.27 kg (70.0 moles) of 47.5% sodium hydrosulfide, 3.56 kg (85.5 moles) of 906% sodium hydroxide, 11.45 kg (115.50 moles) of N-methyl-2-pyrrolidone (NMP) and 5.50 kg of ion exchanged water were charged. The resulting mixture was gradually heated to 225°C over about 3 hours, while passing nitrogen therethrough at normal pressure, and the heating was stopped and cooling was started at a time point when 9.82 kg of water and 0.28 kg of NMP were distilled off. The amount of water remaining in the system at this time point per mole of the alkali metal hydrosulfide charged, was 1.01 moles including the amount of water consumed in the hydrolysis of NMP. Further, since the amount of hydrogen sulfide volatilized away at this time point was 1.4 moles, the amount of the sulfurizing agent in the system after the present step was 68.6 moles.

Thereafter, the resultant was cooled to 200°C, and 9.28 kg (65.1 moles) of p-dichlorobenzene (p-DCB), 4.61 kg (25.3 moles) of 4-chlorophthalic anhydride and 9.37 kg (94.50 moles) of NMP were added thereto, followed by sealing the reaction vessel under nitrogen gas. The mixture was then heated to 275°C at a rate of 0.6°C/min while stirring at

240 rpm, and allowed to react at 275°C for 120 minutes.

After the completion of the reaction, the bottom stop valve of the autoclave was immediately opened, the contents were flashed into an apparatus equipped with a stirrer, and then dried and solidified in the apparatus equipped with a stirrer controlled to 230°C for 1.5 hours, until 95% or more of the NMP used in the polymerization was removed by volatilization, to recover solids containing PPS and salts.

The resulting recovered product and ion exchanged water were placed in an autoclave equipped with a stirrer, and the operation of washing at 75°C for 15 minutes and then filtering was repeated 3 times, to obtain a cake. The resulting cake and ion exchanged water were placed in an autoclave equipped with a stirrer, and then heated to 195°C after replacing the interior of the autoclave with nitrogen. Subsequently, the autoclave was cooled, and the contents were filtered to obtain a cake. The resulting cake was dried at 120°C under a nitrogen gas stream, to obtain dry PPS.

[Comparative Example 3]

Into a 70-liter autoclave equipped with a stirrer, 8.27 kg (70.00 moles) of 47.5% sodium hydrosulfide, 2.96 kg (70.97 moles) of 96% sodium hydroxide, 11.4 kg (115.50 moles) of N-methyl-2-pyrrolidone (NMP), 2.58 kg (31.50 moles) of sodium acetate and 10.5 kg of ion exchanged water were charged. The resulting mixture was gradually heated to 245°C over about 3 hours, while passing nitrogen therethrough at normal pressure, and the reaction vessel was cooled to 160°C after 14.8 kg of water and 280 g of NMP were distilled off. The amount of water remaining in the system at this time point per mole of the alkali metal sulfide charged, was 1.06 moles including the amount of water consumed in the hydrolysis of NMP. Further, the amount of hydrogen sulfide volatilized away was 0.02 moles per mole of the alkali metal sulfide charged.

Subsequently, 10.24 kg (69.63 moles) of p-dichlorobenzene and 9.01 kg (91.00 moles) of NMP were added, the reaction vessel was sealed under nitrogen gas, and the mixture was heated to 238°C at a rate of 0.6°C/min while stirring at 240 rpm. After allowing the mixture to react at 238°C for 95 minutes, the mixture was heated to 270°C at a rate of 0.8°C/min. After allowing the mixture to react at 270°C for 100 minutes, the mixture was cooled to 250°C at a rate of 1.3°C/min, while injecting 1.26 kg (70 moles) of water with a pressure over 15 minutes. Thereafter, the reaction product was cooled to 200°C at a rate of 1.0°C/min, and then rapidly cooled to near room temperature.

After retrieving the contents and diluting with 26.3 kg of NMP, the solvent and solids were separated by filtering with a sieve (80 mesh). The resulting particles were washed with 31.9 kg of NMP, and separated by filtering. The thus obtained particles were washed several times with 56 kg of ion exchanged water, and separated by filtering. After being washed with 70 kg of ion exchanged water and separated by filtering, the resulting water-containing PPS particles were dried with hot air at 80°C, and then dried under reduced pressure at 120°C to obtain PPS.

A quantity of 80 g of the resulting PPS and 12 g of 4,4'-thiodianiline (TDA) were charged into a glass test tube equipped with a stirring blade and capable of being decompressed and replaced with nitrogen, and then the interior of the test tube was decompressed and replaced with nitrogen 3 times. The test tube was controlled to 340°C with the interior of the test tube filled with a nitrogen atmosphere, and heated for 180 minutes while stirring, to obtain a polyarylene sulfide.

The analysis results of the PPSs obtained in the above-described Examples 1 to 11 and Comparative Examples 1 to 3 were as shown in Table 1.

[Table 1]

| | Example 1 | Example 2 | Example 3 | Example 4 | Example 5 | Example 6 | Example 7 |
|---|---|---|---|---|---|---|---|
| Functional group type | Amino group | Amino group | Amino group | Amino group | Amino group | Amino group | Amino group |
| Functional group content (μmol/g) | 1,200 | 960 | 540 | 2,700 | 1,160 | 1,170 | 1,200 |
| Halogen content (ppm) | 4,500 | 5,000 | 4,100 | 7,700 | 2,400 | 6,300 | 5,300 |
| Number average molecular weight | 2,000 | 2,000 | 2,700 | 1,400 | 2,200 | 2,000 | 1,800 |
| Weight reduction ratio during heating (wt%) | 3 | 3 | 2 | 4 | 2 | 3 | 3 |

| | Example 8 | Example 9 | Example 10 | Example 11 | Comparative Example 1 | Comparative Example 2 | Comparative Example 3 |
|---|---|---|---|---|---|---|---|
| Functional group type | Amino group | Amino group | Amino group | Amino group | Acid anhydride group | Acid anhydride group | Amino group |
| Functional group content (μmol/g) | 1,200 | 940 | 730 | 500 | 380 | 480 | 1,100 |
| Halogen content (ppm) | 10,000 | 2,100 | 1,000 | 2,600 | 1,400 | 660 | 1,400 |
| Number average molecular weight | 800 | 1900 | 1800 | 2100 | 4,500 | 4,500 | 2,300 |
| Weight reduction ratio during heating (wt%) | 3 | 2 | 1 | 3 | 2 | 3 | 7 |

[Examples 12 to 21 and Comparative Examples 4 to 6]

Each of the PPSs obtained in Examples 1 to 10 and Comparative Examples 1 to 3, and the compound (B) as a copolymerization component thereof which had been weighed such that the amount of functional groups was equivalent to that in each PPS, were charged into a reaction vessel equipped with a stirring blade and capable of being decompressed and replaced with nitrogen, and the interior of the reaction vessel was decompressed and replaced with nitrogen 3 times. The reaction vessel was controlled to 320°C with the interior of the reaction vessel filled with a nitrogen atmosphere, and heated for 20 minutes while stirring, and then cooled to room temperature to obtain a polyarylene sulfide copolymer. It has been confirmed by the FT-IR spectrum that each resulting polyarylene sulfide copolymer contains a phenylene sulfide unit as a structural unit, and imide group derived from the copolymerization component is introduced into the copolymer. After the polyarylene sulfide copolymer was expelled from the reaction vessel, the degree of contamination of the reaction vessel due to the gas components generated during heating was evaluated in accordance with the following criteria.

A: no washing is necessary before preparing the next batch
B: the next batch can be prepared after washing with NMP at normal temperature
C: washing with NMP under reflux at a temperature equal to or higher than the boiling point thereof is necessary, before preparing the next batch

The evaluation results of the weight average molecular weight Mw, the glass transition temperature Tg, the melting point Tm and the degree of contamination of the reaction vessel, of each of the polyarylene sulfide copolymers were as shown in Table 2.

[Table 2]

| | Example 12 | Example 13 | Example 14 | Example 15 | Example 16 | Example 17 | Example 18 |
|---|---|---|---|---|---|---|---|
| PPS | Example 1 | Example 2 | Example 3 | Example 4 | Example 5 | Example 6 | Example 7 |
| Compound B | PDA | PDA | PDA | PDA | PDA | PDA | PDA |
| Mw | 18000 | 27000 | 32000 | 25000 | 32000 | 18000 | 35000 |
| Tg | 115°C | 110°C | 98°C | 130°C | 120°C | 114°C | 122°C |
| Tm | 253°C | 244°C | 269°C | No melting point | 250°C | 256°C | 250°C |
| Degree of contamination of reaction vessel | B | B | A | B | A | B | A |

| | Example 19 | Example 20 | Example 21 | Comparative Example 4 | Comparative Example 5 | Comparative Example 6 |
|---|---|---|---|---|---|---|
| PPS | Example 8 | Example 9 | Example 10 | Comparative Example 1 | Comparative Example 2 | Comparative Example 3 |
| Compound B | PDA | PDA | PDA | DDS | DDS | PDA |
| Mw | 7500 | 26000 | 46000 | 24000 | 25000 | 58000 |
| Tg | 112°C | 118°C | 116°C | 96°C | 102°C | 122°C |
| Tm | 250°C | 253°C | 255°C | 272°C | 268°C | 248°C |
| Degree of contamination of reaction vessel | B | A | A | C | C | C |

The abbreviations of the respective compounds in Table 2 stand for the following compounds.

PDA: pyromellitic anhydride

DDS: 4,4'-diaminodiphenyl sulfone

As shown in the results of Examples 1 to 11, the production method according to the present invention enables to easily and efficiently produce a polyarylene sulfide which contains a functional group and which generates a small amount of gas during heating.

Further, as shown in the results of Examples 12 to 21 in Table 2, the production method according to the present invention enables to reduce the contamination of the reaction vessel during the production of the polyarylene sulfide copolymer, making it possible to omit or simplify the washing process of the reaction vessel, and to improve workability.

## Claims

1. A method of producing a polyarylene sulfide, the method comprising allowing at least a dihalogenated aromatic compound, an inorganic sulfurizing agent and a compound (A) to react in an organic polar solvent, in the presence of an alkali metal hydroxide, **characterized in that**:

    said compound (A) is present within the range of 0.04 moles or more and 0.5 moles or less with respect to 1 mole of said inorganic sulfurizing agent, in a reaction vessel; and
    said compound (A) is a compound comprising at least one aromatic ring, and having, on said one aromatic ring, at least one reactive functional group selected from the group consisting of amino group, carboxyl group, an acid anhydride group, isocyanate group, epoxy group and silanol group, and at least one functional group selected from the group consisting of hydroxyl group, a salt of hydroxyl group, thiol group and a salt of thiol group.

2. The method of producing a polyarylene sulfide according to claim 1, wherein at least a part of said compound (A) is added to said reaction vessel at the same stage as adding said dihalogenated aromatic compound to said reaction vessel.

3. A method of producing a polyarylene sulfide copolymer, the method comprising:

    obtaining a polyarylene sulfide by the method of producing a polyarylene sulfide according to claim 1 or 2;
    then mixing said polyarylene sulfide with at least one compound (B) selected from compounds represented by the following formulae (a) to (k); and
    further heating the resulting mixture:

[Chem 1]

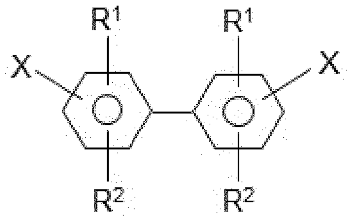

... (a)

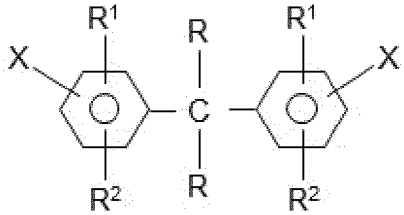

... (b)

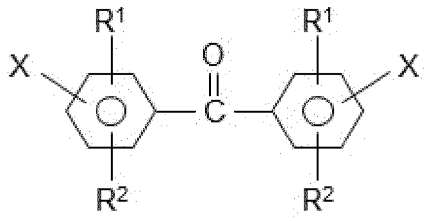

... (c)

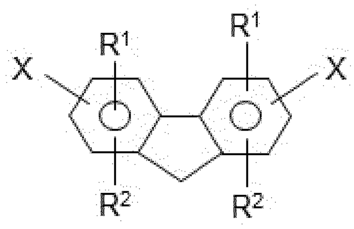

... (d)

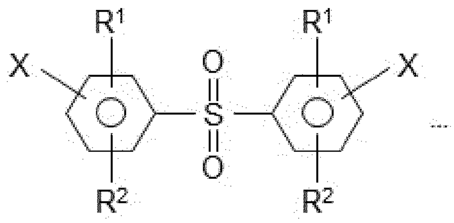

... (e)

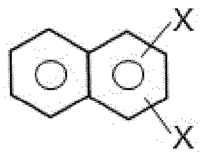

... (f)

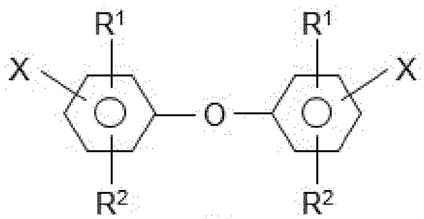

... (g)

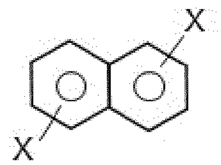

... (h)

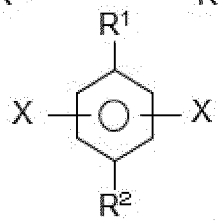

... (i)

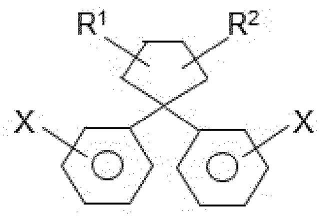

... (j)

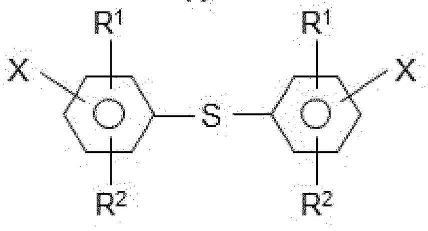

... (k)

(wherein each X represents any one selected from the group consisting of a hydroxyl group, a carboxyl group, a silanol group, a sulfonic acid group, an amino group, an acid anhydride group, an acetamide group, a sulfonamide group, a cyano group, an isocyanate group, an aldehyde group, an acetyl group, an epoxy group and an alkoxysilane group; and each of Rs, $R^1$s and $R^2$s represents a substituent selected from the group consisting of a hydrogen atom, an alkyl group having from 1 to 12 carbon atoms, an aryl group having from 6 to 24 carbon atoms and a halogen group, and Rs, $R^1$s and $R^2$s may be the same as, or different from, each other).

**4.** A polyarylene sulfide comprising amino groups within the range of 400 μmol/g or more and 5,000 μmol/g or less, wherein said polyarylene sulfide has a weight reduction rate of 5 wt% or less when heated from 30°C to 320°C at a temperature rise rate of 10°C/min.

**INTERNATIONAL SEARCH REPORT**

International application No. **PCT/JP2021/030920**

**A. CLASSIFICATION OF SUBJECT MATTER**

***C08G 75/0213***(2016.01)i; ***C08G 75/0222***(2016.01)i; ***C08G 75/0231***(2016.01)i; ***C08G 75/0236***(2016.01)i; ***C08G 75/0245***(2016.01)i; ***C08G 75/0254***(2016.01)i; ***C08G 75/0259***(2016.01)i; ***C08G 75/029***(2016.01)i
FI: C08G75/0254; C08G75/0213; C08G75/0236; C08G75/0222; C08G75/0231; C08G75/0245; C08G75/029; C08G75/0259

According to International Patent Classification (IPC) or to both national classification and IPC

**B. FIELDS SEARCHED**

Minimum documentation searched (classification system followed by classification symbols)

C08G75/0213; C08G75/0222; C08G75/0231; C08G75/0236; C08G75/0245; C08G75/0254; C08G75/0259; C08G75/029

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2020-84027 A (POLYPLASTICS CO.) 04 June 2020 (2020-06-04)<br>claims, paragraph [0060], [0063] | 1-2<br>3-4 |
| X<br>A | CN 110564154 A (SICHUAN UNIVERSITY) 13 December 2019 (2019-12-13)<br>example 4 | 1<br>2-4 |
| X<br>A | CN 110698858 A (SICHUAN UNIVERSITY) 17 January 2020 (2020-01-17)<br>example 4 | 1<br>2-4 |
| E, X<br>E, A | JP 2021-147513 A (KUREHA CORP.) 27 September 2021 (2021-09-27)<br>claims, examples | 1-2<br>3-4 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 October 2021** | **19 October 2021** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2021/030920**

**Box No. III Observations where unity of invention is lacking (Continuation of item 3 of first sheet)**

This International Searching Authority found multiple inventions in this international application, as follows:

(Invention 1) Claims 1-3

Claims 1-3 are classified as invention 1 as a result of having the special technical feature of "a method for manufacturing polyarylene sulfide which causes at least a dihalogenated aromatic compound, an inorganic sulfidation agent, and compound (A) to react in the presence of an alkali metal hydroxide in an organic polar solvent, wherein the compound (A) is configured to be present in a range of 0.04 mol to 0.5 mol with respect to 1 mol of the inorganic sulfidation agent in a reactor vessel."

(Invention 2) Claim 4

Claim 4 does not depend from claim 1. In addition, claim 4 is not substantially identical to or similarly closely related to any of the claims classified as invention 1.

Therefore, claim 4 cannot be classified as invention 1.

Claim 4 is classified as invention 2 as a result of having the special technical feature of "polyarylene sulfide that contains an amino group in a range of 400 μmol/g to 5,000 μmol/g, and the weight reduction rate thereof when heated at a temperature rise speed of 10°C/minute from 30°C to 320°C is 5 wt% or lower."

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

**INTERNATIONAL SEARCH REPORT**
**Information on patent family members**

International application No.
**PCT/JP2021/030920**

| Patent document cited in search report | Publication date (day/month/year) | Patent family member(s) | Publication date (day/month/year) |
|---|---|---|---|
| JP 2020-84027 A | 04 June 2020 | (Family: none) | |
| CN 110564154 A | 13 December 2019 | (Family: none) | |
| CN 110698858 A | 17 January 2020 | (Family: none) | |
| JP 2021-147513 A | 27 September 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4283247 A
- JP 2017066261 A
- WO 2012057319 A
- JP 2020084027 A
- WO 2019151288 A